# EUROPÄISCHE PATENTSCHRIFT

(11) **EP 2 747 969 B1**
(45) Veröffentlichungstag und Bekanntmachung des Hinweises auf die Patenterteilung: **16.12.2015**
(21) Anmeldenummer: 12729884.2
(22) Anmeldetag: 26.06.2012
(51) Int. Cl.: B29B 9/06, B29B 17/00, B29C 47/88, B29C 47/00, B29C 47/08, B29C 47/92, B29C 47/34

(54) **SCHMELZEVERARBEITUNGSANLAGE SOWIE VERFAHREN ZUR VERARBEITUNG VON SCHMELZE IN EINER SOLCHEN**
MELT PROCESSING PLANT AND METHOD FOR TREATING A MELT IN SUCH A PLANT
INSTALLATION DE TRAITEMENT DE MASSE FONDUE, ET PROCÉDÉ POUR TRAITER UNE MASSE FONDUE AU MOYEN D'UN TEL INSTALLATION

(30) Priorität: 25.08.2011 DE 202011104968 U
(43) Veröffentlichungstag der Anmeldung: 02.07.2014
(73) Patentinhaber: Gala Industries Inc, Eagle Rock, VA 24085 (US)
(72) Erfinder: ELOO, Michael, 46509 Xanten (DE); VELTEL, Jürgen, 47626 Kevelaer (DE)
(74) Vertreter: Thoma, Michael
(86) Internationale Anmeldenummer: PCT/EP2012/002687
(87) Internationale Veröffentlichungsnummer: WO 2013/026506

(56) Entgegenhaltungen:
- EP-A1- 0 432 427
- EP-A1- 1 970 180
- EP-A2- 0 774 332
- WO-A2-01/10620
- DE-A1- 4 441 660
- DE-U1-202009 011 114
- JP-A- 2 020 308

## Beschreibung

Die vorliegende Erfindung betrifft eine Schmelzeverarbeitungsanlage, mit einem Schmelzebeschicker zum Beschicken eines Verarbeitungskopfs, insbesondere Granulierkopfs, mit Schmelze, wobei dem Schmelzebeschicker stromauf des Verarbeitungskopfs ein Anfahrventil zum Ableiten der Schmelze während einer Anfahr- und/oder Umrüstphase zugeordnet ist, sowie ein Verfahren zur Schmelzeverarbeitung in einer solchen Schmelzeverarbeitungsanlage.

Derartige Schmelzeverarbeitungsanlagen können verschieden konfiguriert und insbesondere als Granulieranlagen beispielsweise in Form von Unterwassergranulieranlagen ausgebildet sein, wobei je nach Anwendung verschiedene Materialien als Schmelze verarbeitet werden können, beispielsweise Thermoplaste, Polymermassen- und mischungen mit und ohne Additive wie beispielsweise in Form von expandierbaren Polymeren versetzt mit Treibmittel, mit Fasern versetzte Schmelzemassen oder andere im Schmelzezustand verarbeitbare Materialien, insbesondere Kunststoffschmelzen. Alternativ zu solchen Granulieranlagen kann die Schmelzeverarbeitungsanlage aber auch als Rohrextrusionsanlage oder Blasfolienanlage ausgebildet sein, bei denen als Verarbeitungskopf ein entsprechender Extrusionskopf bzw. ein Blasfolienkopf vorgesehen ist. Je nach Anwendung kann der genannte Verarbeitungskopf der Schmelzeverarbeitungsanlage auch ein anderes Formgebungswerkzeug umfassen, mittels dessen die Schmelze in der gewünschten Weise umgeformt bzw. geformt wird.

Derartige Schmelzeverarbeitungsanlagen werden üblicherweise mit einem Anfahrventil betrieben, um beim Anfahren der Anlage, einem Umrüsten der Anlage beispielsweise auf einen anderen Granulierkopf bzw. Verarbeitungskopf, einem Umstellen der Schmelze beispielsweise von farbiger Schmelze auf nicht farbige Schmelze oder einem anderen Umstellungsvorgang, in dem die Anlage nicht im stationären Betriebszustand bzw. im Sollbetriebspunkt gefahren werden kann, die vom Schmelzebeschicker gelieferte Schmelze an dem zumindest einen Verarbeitungskopf vorbei ableiten zu können. Derartige Verarbeitungsköpfe wie Unterwassergranulierköpfe sind nämlich relativ empfindlich, wenn sie mit vom Sollzustand zu stark abweichender Schmelze beaufschlagt werden, beispielsweise noch zu kalter Schmelze oder damit einhergehend zu zähflüssiger Schmelze, was beispielsweise zu einem Verstopfen der Lochplatte führen kann. Das Anfahrventil ist hierbei üblicherweise in dem Förderweg vom Schmelzebschicker, beispielsweise einem Extruder, und dem Verarbeitungskopf angeordnet, wobei das Anfahrventil zusätzlich zu einem Beschickungs- bzw. Versorgungsausgang, der mit dem Verarbeitungskopf verbindbar ist, zumindest einen Ableitausgang umfasst, der die Schmelze am Verarbeitungskopf vorbei ableitet. Über einen solchen Ableitausgang, der in die Umgebung münden kann und/oder von dem bestimmungsgemäßen Prozessweg der Schmelzeverarbeitungsanlage bzw. der Verbindung zwischen Schmelzebeschicker und einem Verarbeitungskopf wegführt bzw. hiervon abzweigt, kann für die weitere Verarbeitung in einem Verarbeitungskopf der Schmelzeverarbeitungsanlage nicht geeignetes Material bzw. Schmelzematerial von dem Verarbeitungskopf ferngehalten und sozusagen ausgesondert werden, wobei die solchermaßen abzusondernde Schmelze aus verschiedenen Gründen als Ausschussmaterial zu behandeln sein kann, beispielsweise weil die Schmelze noch nicht die richtige Temperatur hat und/oder noch umgeschmolzene Stückchen enthält und/oder farbliche Verunreinigungen enthält und/oder andere die Verarbeitung im Granulier- bzw. Verarbeitungskopf beeinträchtigende Eigenschaften hat. Der mit dem Schmelzebeschicker verbindbare Eingangskanal des Anfahrventils kann durch eine verstellbare Weiche beispielsweise in Form eines Drehschiebers oder dergleichen wahlweise mit dem Beschickungskanal oder mit dem Ableitkanal verbunden werden. Ein derartiges Anfahrventil ist beispielsweise aus der Schrift EP 1 970 180 bekannt. Ein gattungsgemäßes Anfahrventil kann ferner auch eine Verteilfunktion übernehmen bzw. als Verteilerventil dienen, insbesondere über mehrere Verarbeitungsausgänge mit mehreren Verarbeitungsköpfen verbindbar sein, um durch das Anfahrventil geleitete Schmelze verschiedenen Verarbeitungsköpfen zuführen zu können, um die Schmelze jeweils bestimmungsgemäß verarbeiten zu können.

Die aus einem solchen Anfahrventil abgeleitete Schmelze wird bisweilen einfach auf den Boden abgelassen, wo sich die Schmelze je nach Dauer des Anfahrvorgangs zu mehr oder minder große Platten bzw. Klumpen verteilt, die nach dem Erstarren vom Boden gelöst und zerteilt werden müssen, was naturgemäß sehr aufwendig ist. Alternativ zum einfachen Ableiten auf den Boden ist es bisweilen auch vorgesehen, unter das Ableitventil Auffangbehälter bzw. in Form von verfahrbaren Schütten zu stellen, die dann, sobald sie voll werden, weggefahren und durch einen neuen, leeren Behälter ersetzt werden. Das Wegfahren der Behälter mit üblicherweise noch flüssiger Schmelze ist sicherheitstechnisch sehr gefährlich, da Schmelze aus dem Behälter schwappen kann. Zum anderen ergeben sich nach dem Abkühlen und Verfestigen der Schmelze Handhabungsprobleme, da sich sehr große Blöcke ergeben, die zunächst aus dem Behälter herauszulösen und sodann in handhabbare Stücke zu zerhacken sind, damit sie recycelt werden können.

Aus der Schrift WO 01/10620 A2 ist eine Schmelzeverarbeitungsanlage gemäß dem Oberbegriff des Anspruchs 1 bekannt. Die umgeleitete Polymerschmelze wird hierbei mittels eines hin und her gehend angetriebenen Portionierers in Schmelzeportionen zerteilt, die auf eine Rutsche fallen, entlang derer die Schmelzeportionen unter Besprühung mit Flüssigkeit in einen Sammelkorb fallen.

Der vorliegenden Erfindung liegt die Aufgabe zugrunde, eine verbesserte Schmelzeverarbeitungsanlage sowie ein verbessertes Verfahren der eingangs genannten Art zu schaffen, die Nachteile des Standes der Technik vermeidet und letzteren in vorteilhafter Weise weiterbildet. Insbesondere soll die Handhabung und das Recycling der vom Anfahrventil als Ausschuss abgeleiteten Schmelze vereinfacht und in sicherheitstechnischer Hinsicht verbessert werden.

Erfindungsgemäß wird diese Aufgabe durch eine Schmelzeverarbeitungsanlage gemäß Anspruch 1 sowie ein Verfahren gemäß Anspruch 14 gelöst. Bevorzugte Ausgestaltungen der Erfindung sind Gegenstand der abhängigen Ansprüche.

Es wird vorgeschlagen, die aus dem Anfahrventil als Ausschuss abgeleitete Schmelze noch vor dem Erstarren bzw. vollständigen Aushärten in handliche Stücke zu portionieren und sodann rasch soweit zu kühlen, dass sie zumindest außenseitig soweit erstarren bzw. verfestigen, dass die Materialstücke leicht handhabbar sind. Durch das Portionieren und anschließende Abkühlen kann auf das mühsame Zerhaken großer verfestigter Materialbrocken verzichtet werden und das in arbeitstechnischer Hinsicht problematische Transportieren großer Schmelzemengen entfällt. Erfindungsgemäß ist dem Anfahrventil eine Portioniervorrichtung zum Portionieren der abgeleiteten Schmelze in Schmelzeportionen zugeordnet, wobei eine Kühlvorrichtung zum Auskühlen der Schmelzeportionen zu zumindest teilweise verfestigten Materialbrocken vorgesehen ist. Durch die dem Ausschuss- bzw. Ableitkanal des Anfahrventils nachgeordnete Portioniervorrichtung wird der Vorlauf der Schmelze bzw. die als Ausschuss abgeleitete Schmelze in mehr oder minder kleine Stückchen aufgeteilt, die durch die Kühlvorrichtung rasch soweit verfestigt werden, dass sie einfach handhabbar sind und vorteilhafterweise ohne weitere Nachbearbeitung recycelt werden können, beispielsweise indem sie wieder aufgeschmolzen bzw. extrudiert und vom Schmelzebeschicker wieder dem Verarbeitungskopf zugeführt bzw. vom Anfahrventil erneut abgeleitet werden.

Die Portioniervorrichtung kann hierbei grundsätzlich verschieden ausgebildet sein. Beispielsweise ist es denkbar, den vom Anfahrventil austretenden Schmelzestrang zunächst in einem Zwischenspeicher aufzufangen und sodann erst zu portionieren. Vorteilhafterweise jedoch umfasst die Portioniervorrichtung einen Zerteiler, der unmittelbar den aus dem Anfahrventil austretenden Schmelzestrang in vorzugsweise etwa gleichgroße Schmelzeportionen zerteilt. Das Zerteilen des Schmelzestrangs kann insbesondere während des Austretens aus dem Anfahrventil, insbesondere unmittelbar im Mündungsbereich des Bypasskanals des Anfahrventils oder kurz stromab hiervon vorgenommen werden, in jedem Fall erfolgt das Zerteilen aber vorteilhafterweise noch vor dem Auftreffen des austretenden Schmelzestrangs auf den Boden bzw. eine Unterlage. Hierdurch vereinfacht sich die weitere Handhabung der zerteilten Schmelzeportionen beträchtlich, da die Schmelze- bzw. Materialstücke bereits beim Auftreffen auf eine Unterlage oder beim Eintauchen in ein Sammelmedium im Wesentlichen die gewünschte Form haben und das Zerteilen nicht durch ein notwendiges Ablösen bzw. Trennen von einem anderen Material erschwert wird.

In Weiterbildung der Erfindung kann der genannte Zerteiler einen Zerteilerkopf mit mehreren Schmelzekanälen, die mit der Ableitöffnung des Anfahrventils in Strömungsverbindung bringbar sind, sowie Absperrmittel zum zyklischen Absperren und Freischalten der Schmelzekanäle und/oder Abtrennmittel zum zyklischen Abtrennen der durch die Schmelzekanäle strömenden Schmelzestränge umfassen. Durch das Vorsehen mehrerer Schmelzekanäle im Zerteilerkopf kann vorteilhafterweise immer zumindest ein Schmelzekanal zumindest teilweise offen gehalten werden, wodurch ein kontinuierliches Ableiten der Schmelze aus dem Anfahrventil ermöglicht und Druckschwankungen durch ein zyklisches Aufstauen vermieden werden. Ist einer der Schmelzekanäle gerade abgesperrt bzw. durch die Abtrennmittel in seinem Auslassquerschnitt beeinträchtigt, kann die Schmelze über einen anderen Schmelzekanal abströmen, so dass sich insgesamt ein kontinuierliches Ableiten aus dem Anfahrventil realisieren lässt. Durch das zyklische Absperren bzw. das zyklische Antrennen des Schmelzestrangs tritt die Portionierung ein, da immer nur ein definiertes Schmelzevolumen aus dem jeweiligen Schmelzekanal austreten kann, bevor der weitere Austritt unterbunden bzw. der nachfolgende Massestrom abgetrennt wird.

Um ein kontinuierliches Ableiten der Schmelze aus dem Anfahrventil zu gewährleisten, kann in Weiterbildung der Erfindung eine Steuereinrichtung zur Steuerung der Absperrmittel und/oder zur Steuerung der Abtrennmittel vorgesehen sein, wobei die genannte Steuereinrichtung die Absperrmittel und/oder die Abtrennmittel derart steuern kann, dass zumindest immer ein Schmelzekanal zumindest teilweise geöffnet ist. Insbesondere kann die Steuerung derart beschaffen sein, dass die Schmelzekanäle im Wechsel zueinander abgesperrt und freigegeben bzw. die Schmelzestränge aus verschiedenen Schmelzekanälen im Wechsel zueinander abgetrennt werden, derart, dass bei oder nach dem Öffnen eines Schmelzekanals zumindest ein anderer Schmelzekanal verschlossen wird und/oder beim Abtrennen des Schmelzestrangs aus einem Schmelzekanal, der aus einem anderen Schmelzekanal austretende Schmelzestrang vorübergehend unbehindert austreten kann.

Der Zerteilerkopf kann dem Absperrventil in unterschiedlicher Art und Weise zugeordnet sein. Nach einer vorteilhaften Ausführung der Erfindung kann der Zerteilerkopf stromab des Mündungsbereiches des Ableitkanals des Anfahrventils, vorteilhafterweise unmittelbar an den Mündungsbereich anschließen, angeordnet und relativ zum Absperrventil beweglich gelagert sein, vorteilhafterweise derart, dass je nach Stellung des Zerteilerkopfs ein jeweils anderer Schmelzekanal in Strömungsverbindung mit der Ableitöffnung des Anfahrventils bringbar ist. Eine Absperrung eines oder mehrerer Schmelzekanäle des Zerteilerkopfes kann bei einer solchen Ausbildung durch Verstellen bzw. Bewegen des Verteilerkopfes relativ zum Anfahrventil erreicht werden. Die Absperrmittel werden hierbei durch die Schnittstelle zwischen Anfahrventil und Verteilerkopf gebildet, wobei ein jeweiliger Schmelzekanal des Verteilerkopfes dann freigeschaltet ist, wenn er mit dem Ableitkanal des Anfahrventils zumindest teilweise in Fluchtung gebracht ist, während der Schmelzekanal dann abgesperrt ist, wenn er außer Fluchtung mit dem Ableitkanal des Anfahrventils gebracht ist. Der Verteilerkopf muss hierbei nicht zwangsweise unmittelbar mit der Ableitöffnung des Anfahrventils in Verbindung gebracht werden. Vorteilhafterweise kann auch ein Zwischenstück vorgesehen sein, das fest mit dem Anfahrventil verbunden ist und einen mit dessen Auslasskanal kommunizierenden Verteilerkanal umfasst, der dann in der genannten Weise durch Bewegen des Verteilerkopfs mit den darin vorgesehenen Schmelzekanälen in Strömungsverbindung bzw. Außerströmungsverbindung verbringbar ist. Hierdurch kann der Zerteiler als eigenständige Baugruppe ausgebildet werden, bei der die Schnittstellen zu dem bewegbaren Zerteilerkopf nicht durch das Anfahrventil vorgegeben sind, sondern durch das genannte Zwischen- bzw. Adapterstück in geeigneter Weise angepasst werden können. Vorteilhafterweise kann durch das genannte Zwischenstück auch der Durchmesser des Ableitkanals in geeigneter Weise angepasst werden. Insbesondere kann der Verbindungskanal in besagtem Anschlussstück eine düsenförmige Ausbildung und/oder eine zum Ausgang hin vorgesehene Querschnittsverjüngung des Schmelzekanals vorsehen, wodurch das Absperren bzw. Abtrennen des Schmelzestrangs erleichtert werden kann.

Alternativ oder zusätzlich kann der Verteilerkopf hierbei in das Anfahrventil integriert sein, insbesondere dergestalt, dass das Anfahrventil zwei oder mehr als zwei Ableitkanäle umfasst, die wahlweise, insbesondere alternativ zueinander durch Verstellen des Ventilkorpus bzw. der Verteilerweiche des Anfahrventils mit dem Einlaufkanal des Anfahrventils in Strömungsverbindung bringbar und hiervon außer Strömungsverbindung bringbar sind. Beispielsweise kann das Anfahrventil einen mit dem Schmelzebeschicker verbindbaren Einlaufkanal, zumindest einen mit dem Verarbeitungskopf verbindbaren Beschickungskanal und zumindest zwei Ableitkanäle umfassen, wobei durch zumindest einen Ventilkorpus beispielsweise in Form eines Ventilschiebers und/oder eines Drehschiebers der Einlasskanal wahlweise auf den Beschickungskanal oder einen der beiden Ableitkanäle durchgeschaltet werden kann. Vorteilhafterweise kann hierbei ein gemeinsamer beweglicher Ventilkorpus vorgesehen sein, der das Öffnen bzw. Absperren der verschiedenen Kanäle gemeinsam erledigt. Hierdurch kann durch zyklisches Hin- und Herbewegen des Ventilkorpus zwischen einer Stellung, in der der Einlasskanal auf den ersten Ableitkanal durchgeschaltet ist, und einer zweiten Stellung, in der der Einlasskanal auf den zweiten Ableitkanal durchgeschaltet ist, ein Portionieren der aus dem Anfahrventil abgeleiteten Schmelze bewerkstelligt werden. Vorteilhafterweise lässt sich hierbei die Größe der Schmelzeportionen durch die Geschwindigkeit bzw. Frequenz steuern, mit der der Ventilkorpus hin- und herbewegt wird.

Alternativ zu einer solchen in das Anfahrventil integrierten Ausbildung kann der genannte Zerteilerkopf auch eine separate Baugruppe bilden, die ausgangsseitig auf die Ableitöffnung bzw. Ableitöffnungen des Anfahrventils gesetzt wird.

Ist der genannte Zerteilerkopf in der vorgenannten Weise relativ zum Anfahrventil beweglich angeordnet, kann in vorteilhafter Weise der Zerteilerkopf Teil eines Schlittens oder Wagens sein, der von einem Schlittenantrieb hin- und herfahrbar angetrieben werden kann. Der Schlitten kann hierbei insbesondere derart hin- und hergefahren werden, dass im Wechsel zueinander jeweils ein anderer der mehreren Schmelzekanäle des Zerteilerkopfes mit einer Ableitöffnung des Anfahrventils in Strömungsverbindung gebracht wird, während jeweils zumindest ein anderer Schmelzekanal des Zerteilerkopfes von der Ableitöffnung des Anfahrventils außer Strömungsverbindung gebracht wird. Die Antriebsvorrichtung für einen solchen hin- und hergehend beweglichen Schlitten kann grundsätzlich unterschiedlich ausgebildet sein, beispielsweise hydraulisch, pneumatisch, elektrisch, mechanisch oder einer Kombination hieraus oder in anderer fremdenergiebetätigter Weise arbeiten. Nach einer vorteilhaften Ausführung der Erfindung kann beispielsweise ein Druckmittelzylinder vorgesehen sein, mittels dessen der Zerteilerkopf entlang einer vorbestimmten linearen Bewegungsbahn hin- und herbewegt werden kann, wobei die genannte Bewegungsbahn insbesondere gerade, gegebenenfalls aber auch bogenförmig gekrümmt sein kann.

Alternativ oder zusätzlich zu einer solchen Schlittenlösung kann der Zerteilerkopf auch drehbar gelagert sein und von einem Drehantrieb rotatorisch vorzugsweise kontinuierlich angetrieben werden. Der Zerteilerkopf kann hierbei nach Art eines Revolverkopfes ausgebildet sein, der mehrere Schmelzekanäle auf einem gemeinsamen Teilungskreis um die Drehachse herum aufweist und relativ zum Anfahrventil derart angeordnet ist, dass die Mündung des Ableitkanals des Anfahrventils auf besagtem Teilkreis liegt, so dass durch Drehen des Verteilerkopfs nacheinander verschiedene Schmelzekanäle mit dem Ableitkanal des Anfahrventils in Strömungsverbindung bringbar sind.

Der Drehantrieb kann hierbei ebenfalls unterschiedlich ausgebildet sein, beispielsweise hydraulisch, pneumatisch, elektrisch oder in einer Kombination der genannten Möglichkeiten arbeiten, beispielsweise einen Drehmotor umfassen, der mechanisch über Riemen, Zahnräder oder in anderer Weise getrieblich mit dem drehbaren Zerteilerkopf verbunden ist.

Anstelle eines beweglich gelagerten Zerteilerkopfes kann auch ein mit dem Anfahrventil starr verbundener Zerteilerkopf vorgesehen sein, wobei vorteilhafterweise ein solcher starr angeordneter Zerteilerkopf eine Mehrzahl von Schmelzekanälen umfasst, denen Absperrmittel und/oder Abtrennmittel zugeordnet sind, so dass wahlweise im Wechsel zueinander jeweils zumindest ein Schmelzekanal abgesperrt bzw. zumindest ein aus einem Schmelzekanal austretender Schmelzestrang abgetrennt werden kann, während zumindest ein anderer Schmelzekanal freigeschaltet bzw. zumindest ein Schmelzestrang aus einem anderen Schmelzekanal austreten kann.

Vorteilhafterweise sind bei einem starr angeordneten Zerteilerkopf die Absperrmittel und/oder die Abtrennmittel relativ zum Zerteilerkopf beweglich gelagert, wobei natürlich auch bei einem beweglich gelagerten Zerteilerkopf solchermaßen bewegliche Absperrmittel bzw. Abtrennmittel vorgesehen sein können. Die Absperrmittel bzw. die Abtrennmittel können durch Bewegung relativ zum Zerteilerkopf ihre Funktion ausführen bzw. zwischen ihren verschiedenen Betriebszuständen hin- und hergeschaltet werden, insbesondere können die Absperrmittel durch Bewegen relativ zum Zerteilerkopf zwischen ihrer absperrenden und freigebenden Stellung bewegt werden bzw. können die Abtrennmittel durch Bewegen relativ zum Zerteilerkopf den jeweiligen Schmelzestrang abtrennen bzw. in Stücke unterteilen.

Die den Absperrmitteln und/oder Abtrennmitteln zugeordneten Antriebsmittel können grundsätzlich ausgebildet sein, insbesondere hydraulisch, pneumatisch, elektrisch, mechanisch oder in einer Kombination hiervon arbeiten. Die Absperrmittel bzw. die Abtrennmitteln können linear beweglich gelagert sein, wobei in diesem Fall ein Linearantrieb vorgesehen sein kann. Alternativ können die Absperrmittel und/oder die Abtrennmittel aber auch drehbar gelagert sein, wobei in diesem Fall ein Drehantrieb zur Verstellung der Absperrmitteln bzw. der Abtrennmittel relativ zum Zerteilerkopf vorgesehen ist.

In vorteilhafter Weiterbildung der Erfindung kann die Größe der Schmelzeportionen durch Veränderung der Bewegungsgeschwindigkeit bzw. der Bewegungsfrequenz des Zerteilerkopfs relativ zum Anfahrventil und/oder durch Veränderung der Bewegungsgeschwindigkeit bzw. Bewegungsfrequenz der Absperrmittel bzw. der Abtrennmittel relativ zum Zerteilerkopf variabel gesteuert werden. Wird die Bewegungsgeschwindigkeit bzw. die Bewegungsfrequenz erhöht, können kleinere Schmelzeportionen erzielt werden, während größere Schmelzeportionen durch eine Verlangsamung der genannten Bewegungsgeschwindigkeit bzw. Bewegungsfrequenz erreicht werden können.

In vorteilhafter Weiterbildung der Erfindung kann die genannte Bewegungsgeschwindigkeit und/oder Bewegungsfrequenz des Zerteilerkopfes und/oder der dem Verteilerkopf zugeordneten Absperrmittel bzw. Abtrennmittel durch eine Steuervorrichtung automatisch oder halbautomatisch gesteuert werden, insbesondere in Abhängigkeit einer erfassten Schmelzeportionsgröße, eines Schmelzeportionsgewichts oder eines Schmelzeportionsvolumens und/oder in Abhängigkeit eines Schmelzemassestroms der abgeleitet wird. Insbesondere kann die Bewegungsgeschwindigkeit bzw. Bewegungsfrequenz dann erhöht werden, wenn die Schmelzeportionen zu groß werden und/oder wenn der Beschickungsschmelzestrom zunimmt. Hierzu kann die Größe der portionierten Schmelzestücke erfasst werden, beispielsweise durch optische oder in anderer Weise durchgeführte Partikelgrößenbestimmung. Alternativ oder zusätzlich kann der Schmelzemassestrom bestimmt werden, der vom Schmelzebeschicker bereitgestellt und/oder durch das Anfahrventil abgeleitet wird.

In Weiterbildung der Erfindung können die vorgenannten Absperr- und/oder Abtrennmittel ein Schneid- und/oder Scherwerkzeug zum Abschneiden bzw. Abscheren des aus einem Schmelzekanal des Zerteilerkopfs austretenden Schmelzestrangs aufweisen, wobei das genannte Schneid- und/oder Scherwerkzeug in vorteilhafter Weiterbildung der Erfindung quer zur Schmelzekanallängsrichtung durch den abzutrennenden Schmelzestrang hindurch bewegbar ist. Das genannte Schneid- bzw. Scherwerkzeug kann hierbei in vorteilhafter Weiterbildung der Erfindung unmittelbar über die Austrittsöffnung des jeweiligen Schmelzekanals des Verteilerkopfs bewegt werden, insbesondere derart, dass das Schneid- bzw. Scherwerkzeug auf den Randbereichen der Mündungsöffnung entlang gleitet.

In vorteilhafter Weiterbildung der Erfindung kann der Zerteilerkopf eine eben ausgebildete Mündungsfläche besitzen, auf der Schmelzekanäle münden und auf der das genannte Schneid- und/oder Scherwerkzeug entlang fahren kann.

In vorteilhafter Weiterbildung der Erfindung können die genannten Absperr- und/oder Abtrennmittel eine Absperr- und/oder Abtrennplatte umfassen, die über die Mündungen der Schmelzekanäle des Zerteilerkopfs hinweg bewegt werden können, vorteilhafterweise in Form eines hin- und hergehenden, linear beweglichen Schiebers oder in Form einer drehbaren Drehplatte, deren Drehachse vorteilhafterweise im Wesentlichen senkrecht zum Mündungsquerschnitt der Schmelzekanäle steht. Vorteilhafterweise können die Mündungsbereiche der Schmelzekanäle des Zerteilerkopfes in einer gemeinsamen Ebene liegen, wobei vorteilhafterweise die genannte Platte parallel zu dieser Mündungsebene beweglich ist, sei es linear und/oder rotatorisch. Insbesondere kann der Zerteilerkopf eine ebene Mündungsfläche besitzen, auf der die Schmelzekanäle münden und auf der die genannte Platte der Absperr- bzw. Abtrennmittel entlang bewegt werden kann.

Die genannte Platte kann hierbei derart ausgebildet sein und bewegt werden, dass je nach Stellung der Platte relativ zum Zerteilerkopf eine jeweilige Schmelzekanalmündung freigegeben oder verschlossen ist.

Insbesondere kann die genannte Platte eine Schneid- und/oder Scherplatte bilden, die zumindest eine Durchtrittsausnehmung umfasst, die mit den Mündungen der Schmelzekanäle des Zerteilerkopfs zumindest teilweise in Fluchtung bringbar ist, wobei ein die genannte Durchtrittsausnehmung begrenzender Randabschnitt eine Schneid- und/oder Scherkante bildet, die beim Hindurchbewegen durch einen austretenden Schmelzestrang diesen abschneidet bzw. abschert. Die - je nach Relativstellung von Schneid- bzw. Scherplatte und Zerteilerkopf - nicht mit einer Durchtrittsausnehmung der genannten Schneid- bzw. Scherplatte fluchtende Mündung eines Schmelzekanals wird von der genannten Platte versperrt, so dass in diesem Moment bzw. Zeitraum keine Schmelze austreten kann. Durch das wechselweise Verbringen der zumindest einen Durchtrittsausnehmung in die fluchtende und nicht fluchtende Stellung mit dem jeweiligen Schmelzekanal wird der dort austretende Schmelzestrang portioniert.

Die genannte Schneid- bzw. Scherplatte kann insbesondere in Form einer Lochplatte bzw. einer Ventilplatte ausgebildet sein, die durch Bewegen wahlweise zumindest einen Schmelzekanal des Zerteilerkopfes freigibt und einen anderen Schmelzekanal absperrt, wobei durch Bewegen der genannten Lochplatte bzw. Ventilplatte jeweils ein anderer Schmelzekanal freigegeben und ein wiederum anderer Schmelzekanal im Wechsel zueinander verschlossen wird.

Die Kühlvorrichtung zum Abkühlen der portionierten Schmelzevolumina kann grundsätzlich unterschiedlich ausgebildet sein und verschiedene, nacheinander oder parallel geschaltete Kühlvorrichtungen umfassen.

In Weiterbildung der Erfindung kann hierbei die genannte Kühlvorrichtung bereits den aus dem Anfahrventil austretenden Schmelzestrang abkühlen, während der Schmelzestrang von der Portioniervorrichtung in Portionen unterteilt wird. Alternativ oder zusätzlich kann die Kühlung auch bereits kurz vor der Portionierung einsetzen und/oder kurz nach der Portionierung vorgenommen werden. Die im Mündungsbereich des Anfahrventils und/oder im Bereich der Portioniervorrichtung vorgesehenen Kühlmittel können hierbei grundsätzlich verschieden ausgebildet sein, wobei die genannten Kühlmittel insbesondere einen Luft- und/oder Gaskühler zur Beaufschlagung der Schmelze mit Kühlluft und/oder Kühlgas umfassen können, beispielsweise in Form eines Kühlluftgebläses und/oder eines Kühlluftsaugers. Alternativ oder zusätzlich können die Kühlmittel einen Flüssigkeitskühler zur Beaufschlagung der Schmelze mit einer Kühlflüssigkeit umfassen, vorteilhafterweise in Form eines Flüssigkeitssprühers, der zumindest eine Sprühdüse umfasst, die auf den aus dem Anfahrventil austretenden Schmelzestrang gerichtet sein kann. Alternativ oder zusätzlich können die genannten Kühlmittel auch einen Kontaktkühler umfassen, der eine vom austretenden Schmelzestrang kontaktierte Kühlfläche umfasst. Insbesondere kann der genannte Kontaktkühler in den Mündungsbereich des Anfahrventils und/oder in den vorgenannten Zerteilerkopf, insbesondere dessen Mündungsbereich integriert sein, um die Mündungsbereiche der entsprechenden Schmelzekanäle zu kühlen.

Erfindungsgemäß ist stromab der Portioniervorrichtung ein Abkühlbad vorgesehen, in das die portionierten Schmelzestücke eingetaucht werden, um Wärme an die Kühlflüssigkeit abzugeben und hierdurch abzukühlen. Durch ein solches Kühlbad kann den portionierten Schmelzestücken durch den Flüssigkeitskontakt in besonders effizienter Weise Wärme entzogen werden.

Erfindungsgemäß ist das genannte Abkühlbad unterhalb der Portioniervorrichtung angeordnet und von den Schmelzeportionen durch Schwerkraft erreichbar. Dementsprechend kann auf eine fremdenergiebetätigte Transportvorrichtung zwischen Portioniervorrichtung und Abkühlbad verzichtet werden. Erfindungsgemäß ist das Abkühlbad senkrecht unter der Portioniervorrichtung angeordnet, so dass die Schmelzeportionen im freien Fall in das Abkühlbad fallen.

Je nach Volumen und verwendeter Kühlflüssigkeit kann das Abkühlbad ohne spezielle Kühlmittel die notwendige Temperatur halten. Gegebenenfalls kann das Abkühlbad zweikreisig ausgebildet werden, wobei dem Abkühlbad ein Sekundärkühlkreislauf mit einem außerhalb des Abkühlbads angeordneten Wärmetauscher und/oder einem innerhalb des Abkühlbads angeordneten Wärmetauschers zur Kühlung der Primärkühlflüssigkeit zugeordnet sein kann. Wird ein Unterwassergranulierer verwendet, kann der Wasserkreislauf des Granulierers zur Kühlung des Abkühlbads verwendet werden.

Die den Schmelzeportionen bzw. Materialbrocken entzogene Wärme könnte grundsätzlich einfach dissipativ abgebaut werden, beispielsweise über entsprechenden Wärmetausch mit der Umgebungsluft. In vorteilhafter Weiterbildung der Erfindung jedoch kann die den Schmelzeportionen bzw. Materialbrocken zu entziehende Wärme rückgewonnen und anderer Stelle der Verarbeitungsanlage oder der Gebäudetechnik, an der Wärme benötigt wird bzw. geheizt werden muss, gezielt eingesetzt werden. Hierzu kann der Kühlvorrichtung eine Wärmerückgewinnungseinrichtung zugeordnet sein, die bei der Kühlung anfallende Wärme gezielt rückgewinnt und speichert und/oder an einem zu beheizenden Anlagen- und/oder Gebäudeteil einsetzt bzw. dorthin transferiert.

Die Wärmerückgewinnung kann grundsätzlich an verschiedenen Stellen erfolgen und verschiedenen Kühlmitteln der Kühlvorrichtung zugeordnet sein. Insbesondere kann die Rückgewinnung im Bereich des zumindest einen Abkühlbads erfolgen, dem im Primär- und/oder Sekundärkreis zumindest ein Wärmetauscher zugeordnet sein kann, über den die Wärme rückgewonnen wird. Alternativ oder zusätzlich kann eine Wärmerückgewinnung über einen entsprechenden Wärmetauscher auch im Bereich der Vorkühlung erfolgen, beispielsweise dem vorgenannten Kontaktkühler, mit dem der zu portionierende Schmelzestrang im Bereich des Anfahrventils und/oder der Portioniervorrichtung gekühlt wird.

Die rückgewonnene Wärme kann beispielsweise dazu verwendet werden, in einer nachgeordneten Trocknungsstation, in der die gekühlten und verfestigten Materialbrocken getrocknet werden sollen, die beispielsweise mittels Gebläse verwendete Trocknungsluft vorzuwärmen. Wird ein Unterwassergranulierer verwendet, kann alternativ oder zusätzlich die rückgewonnene Wärme zum Vorheizen des Wasserkreislaufs des Unterwassergranulierers verwendet werden. Alternativ oder zusätzlich kann der Verarbeitungskopf der Schmelzeverarbeitungsanlage durch die rückgewonnene Wärme beheizt werden. Alternativ oder zusätzlich zum Beheizen solcher Verarbeitungsanlagenkomponenten kann die rückgewonnene Wärme jedoch auch beispielsweise dazu verwendet werden, um die Werkshalle zu beheizen bzw. die Gebäudeheizung zu unterstützen.

Um die weitere Handhabung der im Abkühlbad verfestigten und abgekühlten Materialbrocken zu erleichtern und/oder zu automatisieren, ist erfindungsgemäß ein Abförderer zum Abfördern der Kunststoffbrocken aus dem Abkühlbad vorgesehen. Der genannte Abförderer kann hierbei grundsätzlich verschieden ausgebildet sein. Erfindungsgemäß ist dabei ein Bandförderer vorgesehen, der die im Abkühlbad befindlichen Materialbrocken aus dem Abkühlbad herausfördert.

Erfindungsgemäß umfasst der Bandförderer einen spitzwinklig zur Horizontalen geneigten, durch den Pegel des Abkühlbads hindurch verlaufenden Sammelbandabschnitt, der auf dem Abkühlbad schwimmende Materialbrocken einsammelt und abfördert. Vorteilhafterweise kann der Abförderer oder ein separates Funktionsmodul dem Abkühlbad zugeordnete Umwälzmittel umfassen, um das Abkühlbad umzuwälzen und durch die Umwälzung auf dem Wasser schwimmende Brocken auf den Förderer zu verbringen. Insbesondere können die Umwälzmittel hierbei derart ausgebildet sein, dass eine auf den Sammelbandabschnitt zulaufende Strömung erzeugt wird. Die genannten Umwälzmittel können beispielsweise umlaufende Schaufeln oder ähnliches umfassen, die beispielsweise mit einer Umlenkrolle oder einer Umlenkwalze des Bandförderers verbunden sein können.

Um auch absinkende Materialbrocken abfördern zu können, kann der Bandförderer zusätzlich zu dem genannten schräg durch den Pegel hindurch verlaufenden Sammelbandabschnitt einen am Boden des Abkühlbeckens angeordneten Sammelabschnitt umfassen, der im Wesentlichen liegend oder nur leicht zur Horizontalen geneigt angeordnet ist, insbesondere den Boden des Abkühlbeckens abdeckt, so dass absinkende Materialbrocken zwangsweise auf den genannten Sammelbandabschnitt gelangen.

Um die einzusammelnden Materialbrocken trotz des Wasserwiderstandes mitzunehmen, kann der Bandförderer an dem umlaufenden Fördermittel angebrachte Mitnehmer umfassen, beispielsweise in Form von Vorsprüngen, die vom Obertrum nach oben vorspringen. Vorteilhafterweise können solche Mitnehmer beispielsweise in Form eines Rechens oder in Form eines perforierten Querstegs ausgebildet sein, um keine zu starke Umwälzwirkung auf das Flüssigkeitsbad auszuüben.

In Weiterbildung der Erfindung ist das Umlaufmittel des Bandförderers flüssigkeitsdurchlässig bzw. nicht flüssigkeitshaltend ausgebildet. Insbesondere kann das umlaufende Fördermittel Ausnehmungen umfassen, durch die hindurch auf dem Fördermittel zunächst stehendes Wasser ablaufen kann. Beispielsweise kann ein perforiertes Förderband vorgesehen kann, beispielsweise in Form eines Textilbands. Alternativ oder zusätzlich kann ein Streifenbandförderer vorgesehen sein, bei dem das Förderband aus einer Vielzahl von nebeneinander verlaufenden Riemen gebildet wird, so dass durch die Spalte zwischen den Riemen die Flüssigkeit ablaufen kann. Alternativ oder zusätzlich kann das Obertrum des Bandförderers auch eine leichte Querneigung aufweisen und/oder leicht bauchig im Querschnitt gewölbt sein, so dass auf dem Förderband stehendes Wasser zur Seite hin ablaufen kann.

Um ein seitliches Herabfallen bzw. Herabrollen der mitzunehmenden Materialbrocken zu verhindern, können dem Förderband seitliche Randstege zugeordnet sein, beispielsweise in Form einer Reling, wobei vorteilhafterweise zwischen Förderband und der Randbegrenzung ein zumindest kleiner Spalt vorgesehen ist, um Flüssigkeit seitlich ablaufen zu lassen. Das Spaltmaß ist dabei an die abzufördernden Brocken angepasst, so dass die genannten Brocken nicht hindurch rutschen können.

In Weiterbildung der Erfindung können dem genannten Abförderer eine Kühlvorrichtung und/oder eine Trocknungsvorrichtung zugeordnet sein, um die abgeförderten Materialbrocken weiter zu kühlen und/oder zu trocknen. Gegebenfalls kann eine solche weitere Kühlungsvorrichtung und/oder Trocknungsvorrichtung nach einem weiteren Abkühlbad vorgesehen sein, in das ein erster Abschnitt des Abförderers die aus dem ersten Abkühlbad bzw. einem vorderen Abkühlbad hineinfördert. Um eine energieeffiziente und thermisch gleichermaßen wirksame Abkühlung durch mehrere Abkühlbäder zu erreichen, können die nacheinander angeordneten Abkühlbäder ein sukzessive niedrigere Temperatur aufweisen, d.h. ein zweites Abkühlbad kann niedriger temperiert sein als ein erstes Abkühlbad, ein drittes Abkühlbad kann niedriger temperiert als das zweite Abkühlbad usw.

Die zuvor genannte weitere Kühlvorrichtung und/oder Trocknungsvorrichtung, die dem Abförderer nach dem ersten oder einem weiteren Abkühlbad zugeordnet sind, können grundsätzlich verschieden ausgebildet sein. Beispielsweise können entsprechende Kühlmittel einen Luft- und/oder Gaskühler zur Beaufschlagung der vom Abförderer geförderten Materialbrocken mit Kühlluft oder Kühlgas umfassen. Alternativ oder zusätzlich kann ein Flüssigkeitskühler zur Beaufschlagung der vom Abförderer geförderten Materialbrocken mit Kühlflüssigkeit vorgesehen sein. Alternativ oder zusätzlich kann ein Kontaktkühler vorgesehen sein, beispielsweise in Gestalt eines gekühlten Förderbands.

Um eine Abtrocknung der gekühlten Materialbrocken zu erzielen, kann einer dem Abförderer nachgeordnete Trocknungsstation vorgesehen sein, die die vom Abförderer abgelegten Materialbrocken trocknet. Eine solche Trocknungsstation kann in vorteilhafter Weiterbildung einen Zentrifugaltrockner, einen Zyklonenabscheider oder auch einen Bewegungstrockner umfassen, der beispielsweise als Rüttler ausgebildet sein kann und die Materialbrocken rüttelt oder vibriert, um an den Materialbrocken noch anhaftende Flüssigkeitströpfchen mechanisch abzuschütteln.

Alternativ oder zusätzlich zu einer solchen dem Abförderer nachgeordneten Trocknungsstation kann auch ein Durchgangstrockner vorgesehen sein, der einem Abfördererabschnitt zugeordnet ist und die Materialbrocken abtrocknet, während diese abgefördert werden. Ein solcher Durchgangstrockner kann beispielsweise einen Lufttrockner beispielsweise in Form eines Gebläses, eines Absaugers und/oder eines Zyklonenabschneiders umfassen. Alternativ oder zusätzlich kann ein Strahlungstrockner vorgesehen sein, der die auf dem Abförderer beförderten Materialbrocken beispielsweise durch Infrarotstrahlung zumindest teilweise abtrocknet. Alternativ oder zusätzlich kann der Durchgangstrockner auch als Bewegungstrockner ausgebildet sein bzw. einen solchen aufweisen, beispielsweise in Form einer Rüttelbahn, die einen Teil des Abförderers bilden kann. Beispielsweise kann ein Abschnitt des Abförderers als Vibrationsförderer oder Rüttelförderer ausgebildet sein.

Die Erfindung wird nachfolgend anhand bevorzugter Ausführungsbeispiele und zugehöriger Zeichnungen näher erläutert. In den Zeichnungen zeigen:
- Fig. 1:: eine schematische Darstellung einer Schmelzeverarbeitungsanlage in Form einer Unterwassergranulieranlage nach einer vorteilhaften Ausführung der Erfindung, bei der ein Schmelzebeschicker über ein Anfahrventil einen Unterwassergranulierkopf mit Schmelze beschickt, indem die Schmelze zu Granulat pelletiert wird,
- Fig. 2:: eine schematische Darstellung des Anfahrventils, der dem Anfahrventil zugeordneten Portioniereinrichtung und der der Portioniereinrichtung zu- und nachgeordneten Kühlvorrichtung zum Abkühlen der vom Anfahrventil abgeleiteten und portionierten Schmelzeportionen, sowie des Abförderers zum Abfördern der verfestigten Materialbrocken,
- Fig. 3:: eine schematische Seitenansicht der dem Anfahrventil aus Fig. 1 zugeordneten Portioniervorrichtung, wobei der hin und her bewegliche Schlitten und der hierfür vorgesehen Schlittenantrieb zu sehen sind,
- Fig. 4:: eine Draufsicht auf die Unterseite der Portioniervorrichtung aus Fig. 3, die die verschiedenen Ausgänge der mehreren Schmelzekanäle zeigt,
- Fig. 5:: eine Stirnansicht der Portioniervorrichtung aus den Fig. 3 und 4 in einer Blickrichtung parallel zur Verfahrrichtung des Schlittens,
- Fig. 6:: eine perspektivische Explosionsdarstellung der Portioniervorrichtung aus den Fig. 3-5,
- Fig. 7:: eine Schnittansicht verschiedener Düseneinsätze der Positioniervorrichtung aus den Fig. 3-6,
- Fig. 8:: eine Seitenansicht einer dem Anfahrventil zugeordneten Portioniervorrichtung nach einer weiteren vorteilhaften Ausführung der Erfindung, bei der ein rotatorisch antreibbarer Verteilerkopf vorgesehen ist, dem ein feststehend angeordnetes Abschermesser zugeordnet ist,
- Fig. 9:: eine perspektivische Ansicht der Portioniervorrichtung aus Fig. 8, die das Abschermesser schräg von unten zeigt,
- Fig. 10:: eine Seitenansicht einer dem Anfahrventil zugeordneten Portioniervorrichtung nach einer weiteren vorteilhaften Ausführung der Erfindung, die einen rotierend antreibbaren Zerteilerkopf umfasst, dem ein feststehendes Abschermesser mit nur einer Durchgangsausnehmung zugeordnet ist,
- Fig. 11:: eine perspektivische Darstellung der Portioniervorrichtung aus den Fig. 10, wobei das Abschermesser schräg von unten gezeigt ist,
- Fig. 12:: eine perspektivische Darstellung einer dem Anfahrventil zugeordneten Portioniervorrichtung, die einen feststehenden Zerteilerkopf umfasst, dem ein rotierend antreibbares Abschermesser in Form einer Lochplatte zugeordnet ist,
- Fig. 13:: eine perspektivische Darstellung einer dem Anfahrventil zugeordneten Portioniervorrichtung nach einer weiteren vorteilhaften Ausführung der Erfindung, die an einen feststehend angeordneten Zerteilerkopf mit einer Vielzahl von Schmelzekanälen nach Art einer Brause umfasst, dem ein rotatorisch antreibbares Abschermesser in Form einer Lochplatte zugeordnet ist,
- Fig. 14:: eine schematische Darstellung verschiedener Ausführungsformen des Abförderers zum Abfördern der portionierten Schmelze bzw. Materialbrocken, wobei die Teilansicht a) eine Ausführung des Abförderers zum Einsammeln von in einem Abkühlbad schwimmenden Materialbrocken zeigt, die Teilansicht b) eine Ausführung des Abförderers für in einem Abkühlbad nicht schwimmende Materialbrocken zeigt und die Teilansicht c) eine Ausführung des Abförderers für Luft- bzw. Sprühkühlung zeigt.

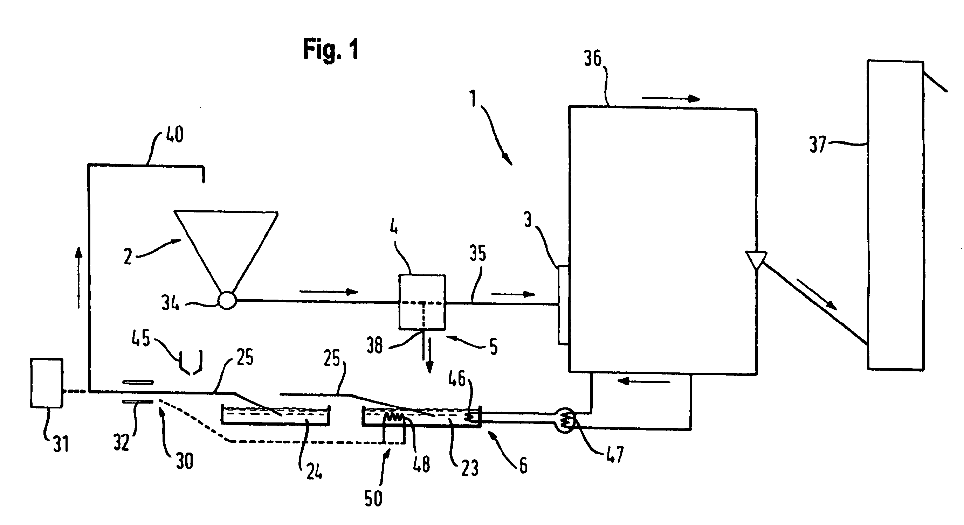

Wie Fig. 1 zeigt, kann eine Schmelzeverarbeitungsanlage nach einem Ausführungsbeispiel der Erfindung als Unterwassergranulieranlage 1 ausgebildet sein. Ein Schmelzebeschicker 2, der beispielsweise einen Extruder 34 umfassen kann, versorgt über einen Versorgungskanal 35 einen Granulierkopf 3 des Unterwassergranulierers mit Schmelze, die in an sich bekannter Weise im Granulierkopf 3 durch eine Lochplatte mit einer Vielzahl von Bohrungen gedrückt und durch ein Granuliermesser in Pellets zerschnitten wird, die vom Wasserkreislauf 36 der Granulieranlage 1 vom Granulierkopf 3 abtransportiert werden und in einen Trockner beispielsweise einem Zentrifugaltrockner 37 gelangen können, indem sie getrocknet werden.

Um die Schmelze beim Anfahren des Prozesses oder während einer Umrüstphase an dem Granulierkopf 3 vorbei ableiten zu können, ist zwischen dem Schmelzebeschicker 2 und dem Granulierkopf 3 ein Anfahrventil 4 vorgesehen, das in der Betriebsstellung den Versorgungskanal 35 zwischen Schmelzebeschicker 2 und Granulierkopf 3 durchschaltet, in der Anfahr- bzw. Ableit- oder Bypassstellung die vom Schmelzebeschicker 2 kommende Schmelze hingegen ableitet. Hierzu umfasst das Anfahrventil 4 neben zumindest einem Eingangskanal und zumindest einem Beschickungskanal zumindest einen Bypasskanal mit einer Ableitöffnung 38, vgl. Fig. 1. Das Anfahrventil 4 könnte auch mehrere Eingangskanäle und/oder mehrere Beschickungskanäle besitzen, um ggf. mehrere Schmelzebeschicker 2 mit mehreren Granulierköpfen 3 verbinden bzw. die Schmelze im bestimmungsgemäßen Funktionszustand auf verschiedene Verarbeitungsköpfe verteilen zu können.

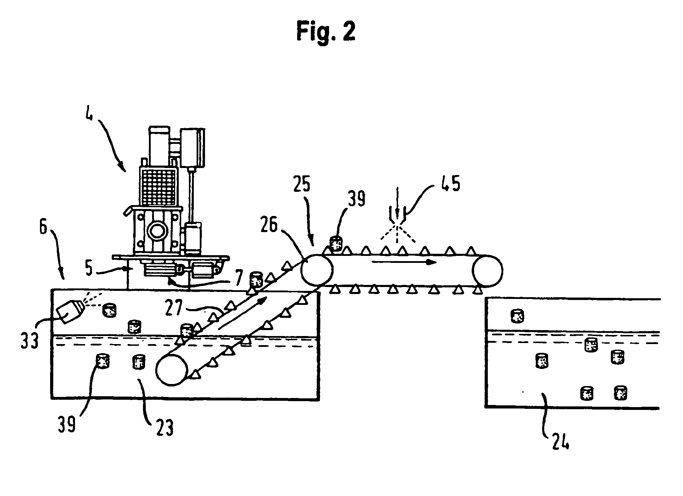

Wie Fig. 2 zeigt, ist dem Anfahrventil eine Portioniervorrichtung 5 zugeordnet, die die abgeleitete Schmelze in handliche Schmelzeportionen portioniert, insbesondere den aus der Ableitöffnung 38 des Anfahrventils 4 austretenden Schmelzestrang in jeweils etwa gleichgroße Schmelzebatzen zerteilt, die dann durch Abkühlen zumindest teilweise verfestigen und Materialbrocken 39 bilden, die nach weiterer Abkühlung und Trocknung in einem Recyclingkreislauf 40 wieder verarbeitet werden können, beispielsweise dem Schmelzeerzeuger zugeführt werden können. Alternativ zu einer direkten Rückführung der Materialbrocken 39 in den Schmelzeerzeuger können die Materialbrocken 39 jedoch auch in anderer Weise recycelt bzw. weiterverarbeitet werden. Beispielsweise können sie zunächst auch nur zwischengelagert werden, um dann je nach späteren Bedarf die Verwendung festlegen zu können. Die Materialbrocken 39 müssen hierbei auch nicht der Verarbeitungsanlage, aus der sie abgeleitet wurde, wieder zugeführt werden. Vielmehr können die Materialbrocken 39 auch anderen Verwendungen zugeführt werden, beispielsweise für eine Rohrextrusion oder anderen Anwendungen, in denen entsprechendes Material benötigt wird, wobei hier gegebenenfalls weitere Vor- oder Zwischenverarbeitungsschritte vorgenommen werden können, beispielsweise eine Zerkleinerung oder eine Mischung mit anderen Stoffen.

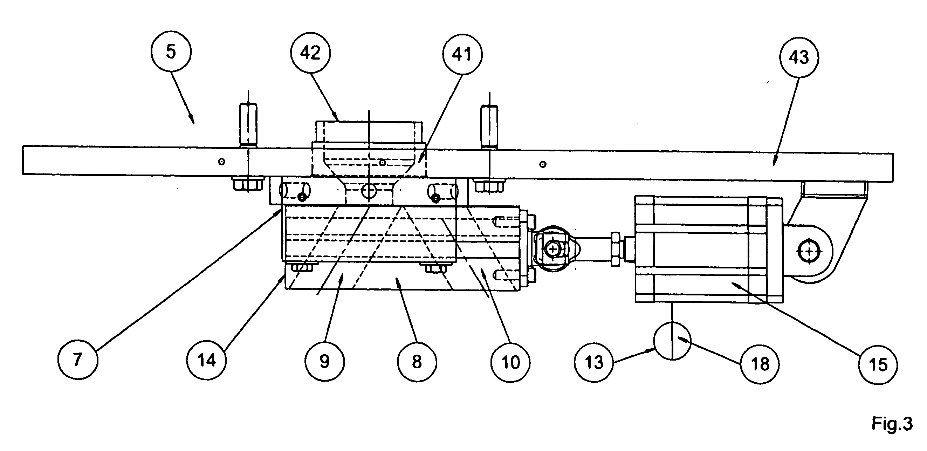

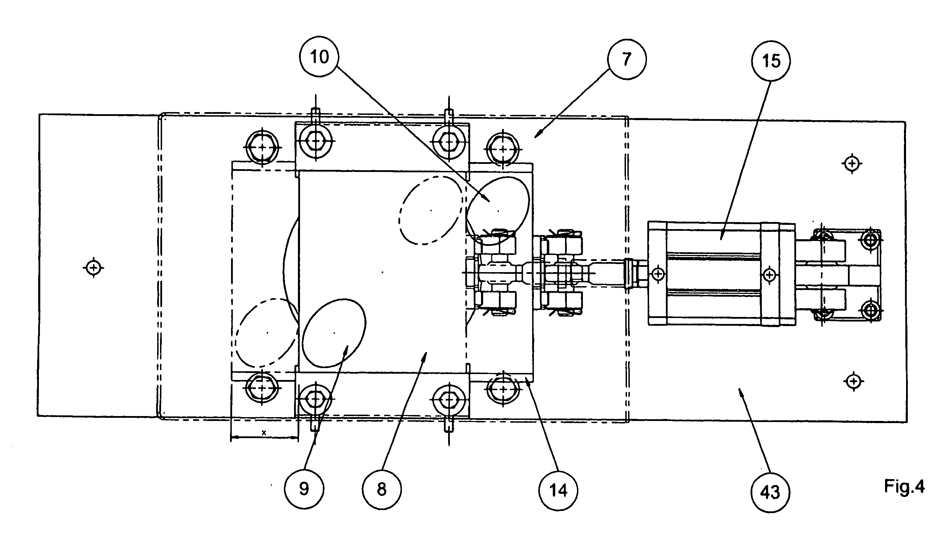

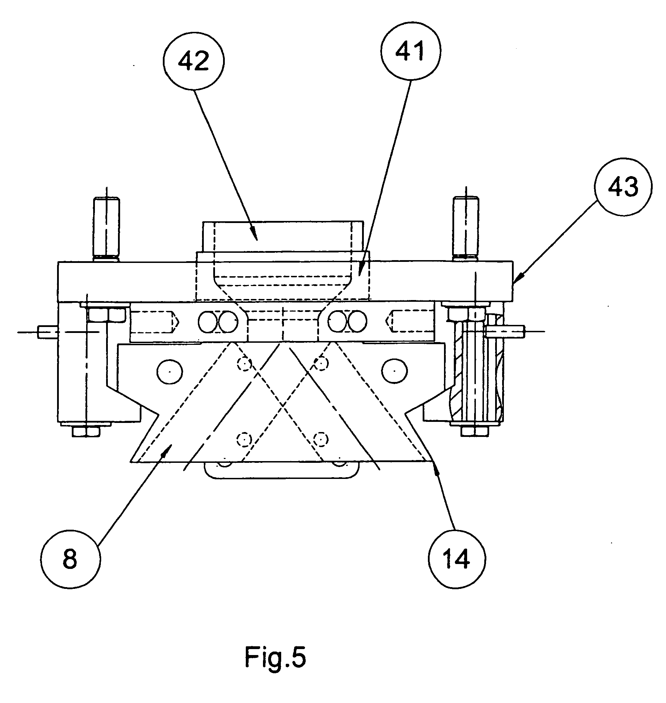

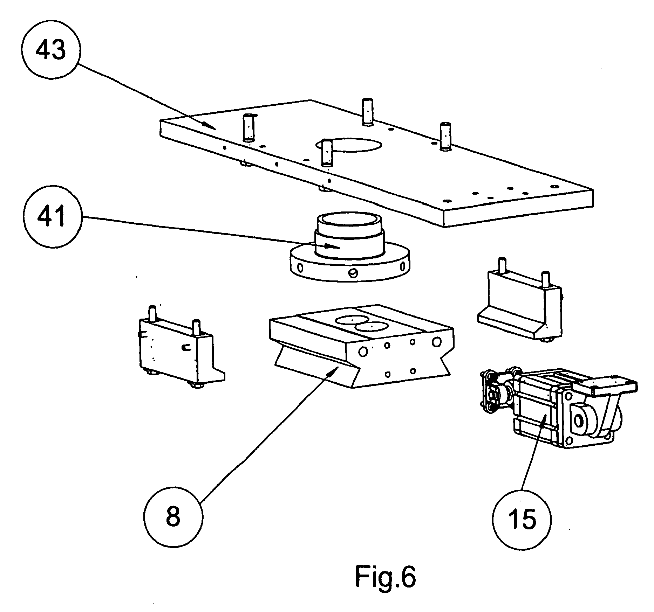

Die Portioniervorrichtung 5, die an der Ableitöffnung 38 des Anfahrventils 4 angeordnet ist, kann nach einer ersten Ausführungsform, die in den Fig. 3-7 gezeigt ist, einen relativ zum Anfahrventil 4 beweglich gelagerten Zerteilerkopf 8 aufweisen, der Teil eines Schlittens 14 ist, der relativ zum Anfahrventil 4 linear hin- und her verfahren werden kann. Der besagte Zerteilerkopf 8 umfasst mehrere Schmelzekanäle 9 und 10, die voneinander separat ausgebildet sind und verschiedene Mündungsbereiche haben. Mit ihren Eintrittsöffnungen liegen die beiden Schmelzekanäle 9 und 10 unmittelbar nebeneinander, vgl. Fig. 3, während die Auslassbereiche der Schmelzekanäle 9 und 10 voneinander beabstandet sind. Dies wird durch eine unterschiedlich geneigte Kanalführung erzielt, vgl. Fig. 5.

Durch den Schlitten 14 kann der Zerteilerkopf 8 derart relativ zum Anfahrventil 4 hin und her bewegt werden, dass die beiden Schmelzekanäle 9 und 10 mit ihrem Eingangsbereich über die Ableitöffnung 38 des Anfahrventils 4 fahren und je nach Stellung des Schlittens 14 einmal der eine Schmelzekanal 9 und ein anderes Mal der andere Schmelzekanal 10 mit der genannten Ableitöffnung 38 in Strömungsverbindung gerät. Der jeweils andere Schmelzekanal 9 gerät hierbei außer Strömungsverbindung, so dass er vom abgeleiteten Schmelzestrom abgeschnitten wird.

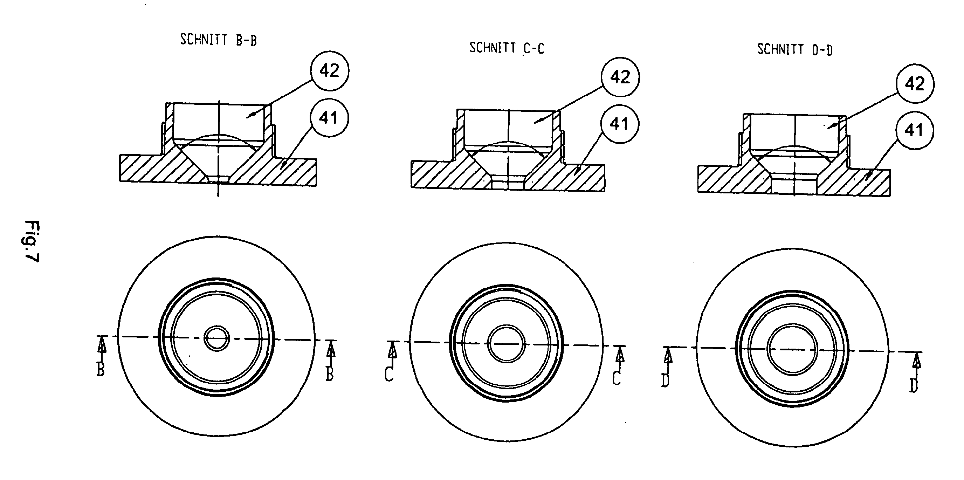

Die Schmelzekanäle 9 und 10 des Schlittens 14 müssen hierbei nicht unmittelbar mit der Ableitöffnung 38 des Anfahrventils 4 in Eingriff bzw. Strömungsverbindung kommen. Vorteilhafterweise kann der Zerteiler 7 ein Zwischen- bzw. Adapter- oder Anschlussstück 41 in Form eines Düseneinsatzes umfassen, das an dem Anfahrventil 4 feststehend montiert wird und mit der genannten Ableitöffnung 38 in Strömungsverbindung steht. Der Schlitten 14 fährt relativ zu dem Zwischenstück 41 hin und her, so dass die Schmelzekanäle im Zerteilerkopf 8 mit der Düsenöffnung des Düseneinsatzes des Adapterstücks 41 in Strömungsverbindung kommen bzw. hiervon außer Strömungsverbindung gelangen. Wie Fig. 7 zeigt, kann der Einlass des Zerteilers 7, der von dem genannten Adapterstück 41 gebildet sein kann, einen Schmelzeeinlasskanal 42 umfassen, der sich in Strömungsrichtung im Querschnitt verjüngt und den Auslassquerschnitt der Ableitöffnung 38 des Anfahrventils 4 auf einen deutlich geringeren Durchmesser verjüngt. Wie Fig. 7 zeigt, können hierbei unterschiedliche Querschnittsverläufe vorgesehen sein, wobei die Verjüngung vorteilhafterweise über einen im Wesentlichen konischen Kanalabschnitt erzielt wird, der einen Einlassbereich größeren Querschnitts auf einen Düsenauslassbereich kleineren Querschnitts verjüngt. Der Durchgangsquerschnitt des Adapterstücks 41 kann hierbei insbesondere an die Viskosität der abgeleiteten Schmelze angepasst werden, wobei gegebenenfalls auch Durchmessererweiterungen möglich sein können. Für eine Mehrzahl von Schmelzen wird jedoch eine düsenförmige Querschnittsverjüngung hilfreich sein, insbesondere bei üblichen Schmelzen wie sie in Unterwassergranulierungen Verwendung finden. Vorteilhafterweise kann der Auslassquerschnitt des Düseneinsatzes je nach Material und Viskosität der Schmelze weniger als 75%, vorzugsweise weniger als 50% und insbesondere etwa 25%-50% des Einlassquerschnittes betragen, vgl. Fig. 7.

Wie die Fig. 3-6 zeigen, kann der Schlitten 14 an einem vorzugsweise plattenförmigen Träger 43 linear verschieblich geführt bzw. gelagert sein, wobei der genannte Träger 43 das vorgenannte Adapterstück 41 trägt bzw. aufweist und an das Anfahrventil 4 montierbar ist. Hierzu kann der genannte Träger 43 vorteilhafterweise eine die Kontur des Anfahrventils 4 angepasste Montagefläche besitzen.

Um den Schlitten 14 hin- und hergehend antreiben zu können, kann ein Schlittenantrieb 15 vorgesehen sein, der in der gezeichneten Ausführungsform als Druckmittelzylinder ausgebildet ist, jedoch auch in anderer Weise ausgeführt sein kann, wie dies eingangs erläutert wurde. Wie Fig. 3 zeigt, kann der Schlittenantrieb 15 einerseits mit dem Schlitten 14 verbunden sein und andererseits an dem Träger 43 angelenkt sein.

Durch ein Hin- und Herfahren des Schlittens 14 gelangen die mehreren Schmelzekanäle 9 und 10 im Zerteilerkopf 8 zueinander wechselweise in Strömungsverbindung mit der Ableitöffnung 38. Wenn ein Schmelzekanal mit der Ableitöffnung in Strömungsverbindung steht, ist der jeweils andere Schmelzekanal außer Strömungsverbindung. Hierdurch wird der austretende Schmelzestrang in entsprechende Stückchen zerteilt. Durch eine nur schematisch dargestellte Steuereinrichtung 13 wird der Schlittenantrieb 15 in der gewünschten Weise angesteuert, um die Schmelzezerteilung in der gewünschten Weise zu erzielen. Insbesondere können Steuermittel 18 die Antriebsgeschwindigkeit und -frequenz variieren, um die Portionsgröße zu variieren bzw. in der gewünschten Weise zu steuern bzw. auf eine gewünschte Portionsgröße einzuregeln.

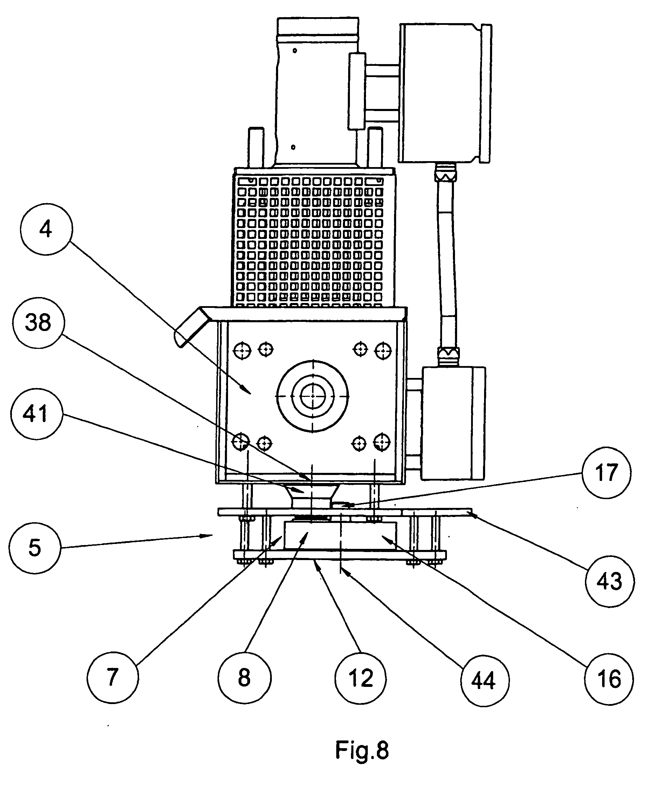

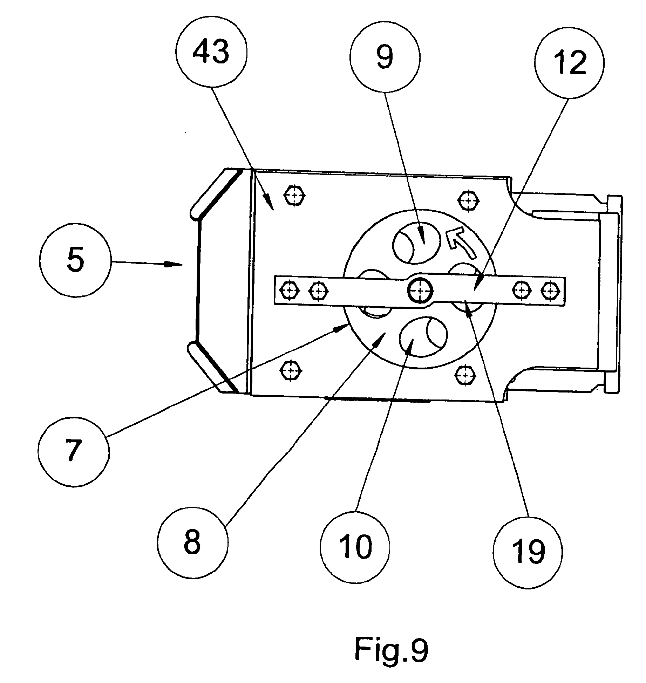

Alternativ zu der in den Fig. 3-7 gezeigten Schlittenlösung kann der Zerteiler 7 auch einen rotatorisch beweglichen Zerteilerkopf 8 umfassen, wie dies die Ausführung nach den Fig. 8 und 9 zeigt. Der Zerteilerkopf 8 kann im Wesentlichen plattenförmig ausgebildet sein und mehrere Durchgangsbohrungen aufweisen, die Schmelzekanäle 9 und 10 bilden, wobei die Anzahl der Schmelzekanäle variieren kann. Vorteilhafterweise sind hier zumindest zwei Schmelzekanäle vorgesehen, wobei jedoch auch mehr als zwei Schmelzekanäle Verwendung finden können. In der gezeichneten Ausführung sind vier solcher Schmelzekanäle in dem Zerteilerkopf 8 ausgebildet.

Die Schmelzekanäle 9 und 10 sind hierbei auf einem gemeinsamen Teilungskreis um die Rotationsachse 44 herum angeordnet, so dass sie bei Drehung des Zerteilerkopfs 8 auf derselben Umlaufbahn umlaufen. Die Drehachse 44 ist hierbei im Wesentlichen parallel zur Längsrichtung des Ableitkanals des Anfahrventils 4 und/oder im Wesentlichen parallel zur Längsrichtung der Düsenöffnung des Zwischenstücks 41 ausgerichtet. Wie bei der vorhergehenden Ausführung kann vorteilhafterweise nämlich auch bei der Ausführung nach Fig. 8 und 9 ein Adapterstück 41 Verwendung finden, welches starr auf die Ableitöffnung 38 des Anfahrventils 4 montierbar ist, insbesondere mittels des schon erläuterten Trägers 43, an dem der Zerteilerkopf 8 beweglich gelagert ist.

Durch Drehung des Zerteilerkopfes 8 gelangt jeweils ein anderer Schmelzekanal 9 bzw. 10 mit der Düsenöffnung des Zwischenstücks 41 und damit mit der Ableitöffnung 38 des Anfahrventils 4 in Strömungsverbindung, während die jeweils anderen Schmelzekanäle von der ausströmenden Schmelze abgeschnitten sind. Hierdurch wird in entsprechender Weise eine Portionierung des austretenden Schmelzestrangs erzielt. Durch Variierung der Drehgeschwindigkeit des Zerteilerkopfs 8 bzw. der Frequenz, mit der der Zerteilerkopf 8 rotatorisch weitergestellt wird, kann auch hier die Schmelzeportionsgröße eingestellt werden. Die Drehung des Zerteilerkopfes 8 kann durch einen geeigneten Drehantrieb 17 erfolgen, der grundsätzlich verschieden ausgebildet sein kann, beispielsweise in Form eines Elektromotors mit einer zugeordneten Getriebestufe, um die gewünschte Drehzahl einstellen und gegebenenfalls auch variieren zu können.

Wie Fig. 9 zeigt, sind auf der Ausgangsseite des Zerteilerkopfs 8 Abtrennmittel 12 feststehend angeordnet, die bei Drehung des Zerteilerkopfs 8 über die Ausgangsöffnungen der Schmelzekanäle streichen und die dort austretenden Schmelzestränge abtrennen. In der gemäß Fig. 9 gezeichneten Ausführung können die genannten Abtrennmittel 12 ein Schneid- bzw. Scherwerkzeug 19 umfassen, welches beispielsweise als Leiste ausgebildet sein kann, die unmittelbar auf der Ausgangsseite des Zerteilerkopfs 8 sitzt und über die Austrittsöffnungen der Schmelzekanäle streicht, wenn der Zerteilerkopfs 8 gedreht wird, vgl. Fig. 9.

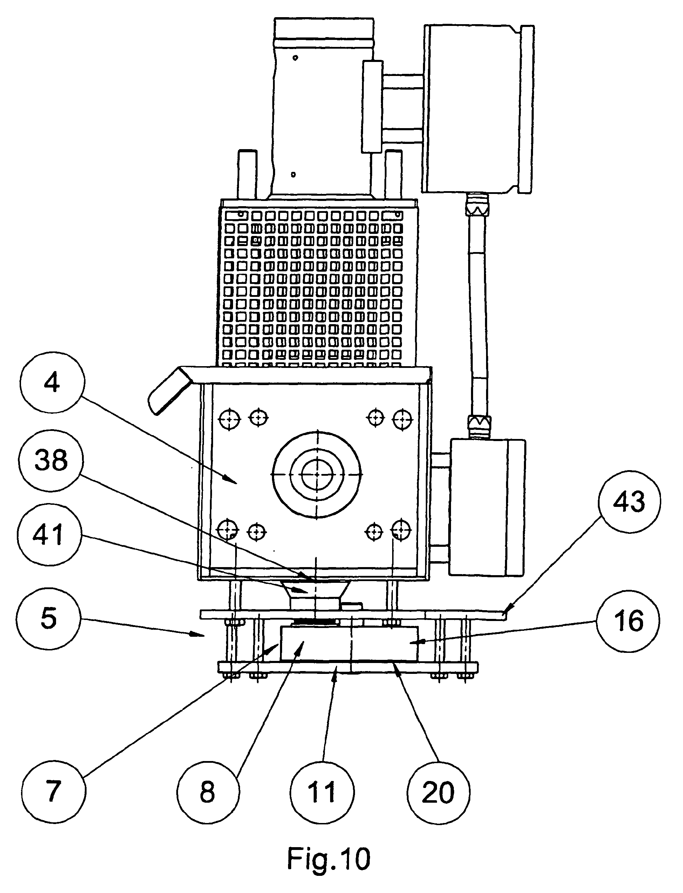

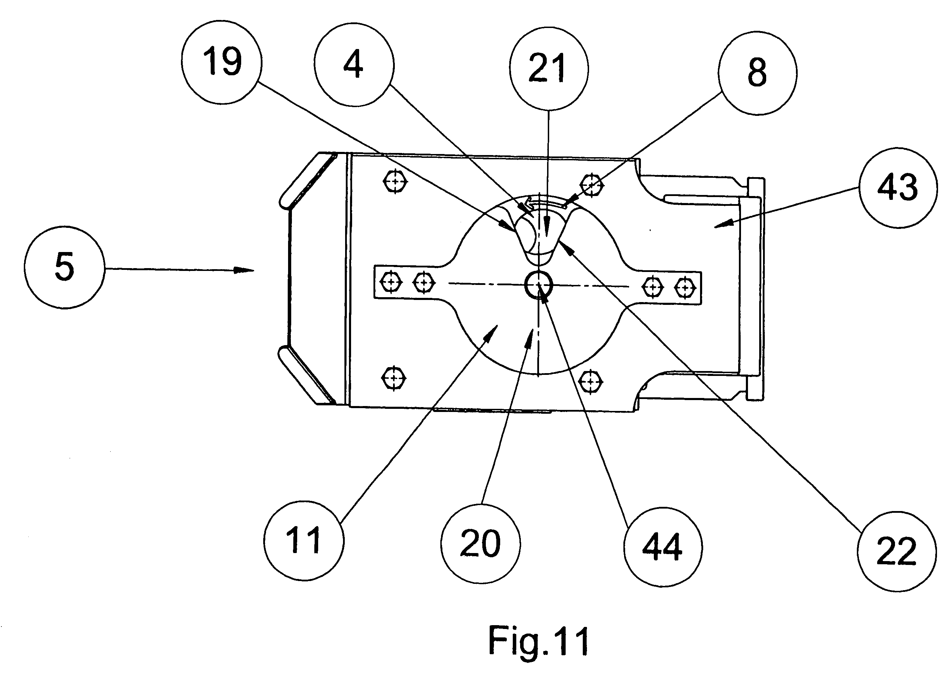

Wie die Fig. 10 und 11 zeigen, können die Abtrennmittel 12 jedoch gleichzeitig auch Absperrmittel 11 bilden, die einen Teil der Schmelzekanäle 9 und 10 in dem Zerteilerkopf 8 ausgangsseitig verschließen und nur jeweils einen Schmelzeanal 9 ausgangsseitig freigeben. Hierzu kann das genannte Schneid- bzw. Scherwerkzeug 19 in Form einer Schneid- bzw. Scherplatte 20 ausgebildet sein, die im Wesentlichen die gesamte Ausgangsseite des Zerteilerkopfs 8 überdeckt und nur eine begrenzte Durchtrittsausnehmung 21 umfasst, die größenmäßig etwa dem Ausgangsquerschnitt der Schmelzekanäle 9 und 10 entspricht bzw. leicht größer ausgebildet ist, so dass jeweils nur ein Schmelzekanal freigegeben wird, wenn sich dieser im Bereich der Durchtrittsausnehmung 21 befindet, während die übrigen Schmelzekanäle 9 und 10 verschlossen sind. Die Schneid- bzw. Scherplatte 20 sitzt hierzu unmittelbar auf der ebenen Ausgangsseite des Zerteilerkopfs 8, wobei ein bündiger Sitz vorgesehen sein kann.

Die genannte Schneid- bzw. Scherplatte 20 ist hierbei feststehend angeordnet, so dass die Relativbewegung zum Zerteilerkopf 8 durch die Drehbewegung des Zerteilerkopfs 8 bewirkt wird. Alternativ oder zusätzlich könnte auch die Schneid- bzw. Scherplatte 20 rotatorisch durch einen geeigneten Drehantrieb angetrieben werden. Wie Fig. 11 zeigt, wird die Durchtrittsausnehmung 21 von einem Randabschnitt 22 der Schneid- bzw. Scherplatte 20 begrenzt, welcher eine Schneid- und/oder Scherkante bildet, durch die die austretende Schmelze abgeschnitten bzw. abgeschert werden kann. Im Übrigen entspricht die Ausführung der Fig. 10 und 11 im Wesentlichen der Ausführung nach Fig. 8 und 9.

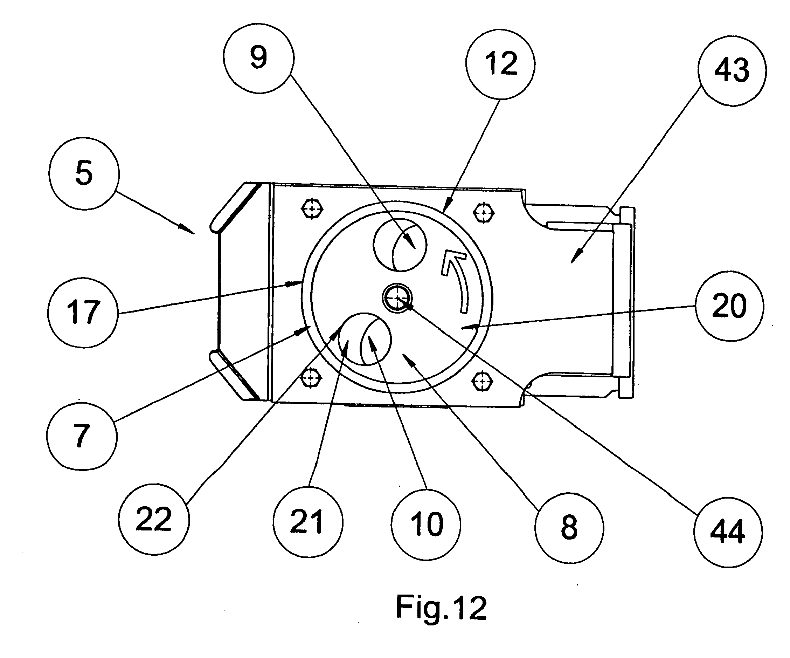

Wie Fig. 12 zeigt, kann der Zerteilerkopf 8 mit den mehreren Schmelzekanälen 9 und 10 auch feststehend angeordnet sein, d.h. relativ zum Anfahrventil 4 unbeweglich montiert sein, wobei hier die mehreren Schmelzekanäle 9 und 10 einen gemeinsamen Einlassbereich haben, der mit der Auslassöffnung 38 des Anfahrventils 4 in Strömungsverbindung steht und sich dann in die mehreren Schmelzekanäle 9 und 10 aufgabelt.

Die Zerteilung bzw. Portionierung der auslaufenden Schmelze wird durch die rotatorisch antreibbare Schneid- bzw. Scherplatte 20 bewirkt.

Der Drehantrieb 17 zum Antreiben der Schneid- bzw. Scherplatte 20 kann grundsätzlich verschieden ausgebildet sein, beispielsweise einen Elektromotor und gegebenenfalls eine Getriebestufe umfassen, um die Scherplatte in der gewünschten Weise mit variabler Drehzahl antreiben zu können.

In der gezeichneten Ausführung umfasst die Schneid- bzw. Scherplatte zwei Durchgangsausnehmungen 21, die je nach Drehstellung mit der Mündung der Schmelzekanäle 9 bzw. 10 des Zerteilerkopfs 8 zur Fluchtung gelangen. Vorteilhafterweise kann der Zerteilerkopf 8 in seinem Inneren hierbei eine Pufferkammer ausreichend bemessenem Volumens umfassen, in der vom Anfahrventil 4 her nachlaufende Schmelze aufgenommen bzw. gepuffert werden kann, während die Schneid- bzw. Scherplatte die Abströmkanäle verschließt.

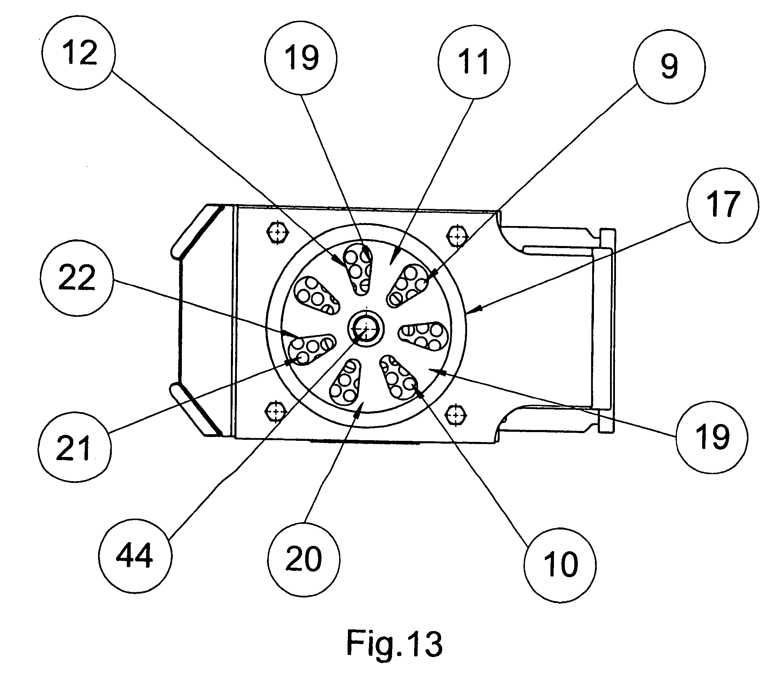

Die Ausführung gemäß Fig. 13 ist grundsätzlich ähnlich der Ausführung nach Fig. 12. Auch ist der Zerteilerkopf 8 feststehend angeordnet und eine hierzu drehbar angeordnete Schneid- bzw. Scherplatte 20 vorgesehen, die über die Mündungsseite des Zerteilerkopfs 8 rotieren kann und durch einen entsprechenden, nicht eigens dargestellten Drehantrieb 17 rotatorisch antreibbar ist. Im Vergleich zur Ausführung nach Fig. 12 umfasst der Zerteilerkopf 8 eine größere Vielzahl an Schmelzekanälen, die in Fig. 13 mit den Ziffern 9 und 10 gekennzeichnet sind, wobei jedoch sehr viel mehr als nur zwei solche Schmelzekanäle vorgesehen sind, beispielsweise mehr als 20 und gegebenenfalls auch mehr als 50. Insbesondere kann der Zerteilerkopf 8 ähnlich einer Brause bzw. einem Brausekopf ausgebildet sein.

Die Schneid- bzw. Scherplatte 20 umfasst im Vergleich zu den Schmelzekanälen sehr viel größere Durchtrittsausnehmungen 21, die derart angeordnet und ausgebildet sein können, dass jeweils eine Mehrzahl von Schmelzekanälen 9 bzw. 10 gleichzeitig freigegeben sind, sich die Durchtrittsausnehmung 21 bei entsprechender Drehstellung der Schneid- bzw. Scherplatte 20 in fluchtender Stellung befindet. Auch hier bilden die die Durchtrittsausnehmungen 21 einfassenden Randabschnitte 22 der Schneid- bzw. Scherplatte 20 Schneid- bzw. Scherkanten, die den austretenden Schmelzestrang abschneiden bzw. abscheren.

Die Vielzahl der Schmelzekanäle können bei dieser Ausführungsform einen gemeinsamen Eingangsbereich besitzen bzw. vorteilhafterweise mit einer Verteilerkammer in Strömungsverbindung stehen, in die die aus dem Anfahrventil 4 abgeleitete Schmelze eingeleitet wird.

Die in der beschriebenen Weise zerteilten bzw. portionierten Schmelzebatzen werden durch eine in den Fig. 1 und 2 dargestellte Kühlvorrichtung 6 abgekühlt, um die Verfestigung der Schmelze zu Materialbrocken zu bewirken und/oder zu beschleunigen. In vorteilhafter Weiterbildung der Erfindung kann die genannte Kühlvorrichtung hierbei verschiedene Kühlmittel umfassen, die in verschiedenen Kombinationen miteinander vorgesehen sein können.

Wie Fig. 2 zeigt, kann die Kühlvorrichtung 6 insbesondere Kühlmittel 33 umfassen, die die Schmelze unmittelbar beim Portionieren oder unmittelbar nach dem Portionieren kühlen. Die genannten Kühlmittel 33 können hierbei beispielsweise als Sprühkühlmittel ausgebildet sein, die eine Kühlflüssigkeit auf den austretenden Schmelzestrang sprühen, der aus dem Zerteiler 7 austritt. Alternativ oder zusätzlich können die genannten Kühlmittel 33 auch einen Luft- bzw. Gaskühler umfassen, der Kühlluft bzw. Kühlgas auf den Schmelzestrang richtet. Wiederum alternativ oder zusätzlich können die Kühlmittel 33 auch einen Kontaktkühler umfassen, der eine mit dem Schmelzestrang in Kontakt tretende Kühlfläche besitzt. Beispielsweise kann der Zerteilerkopf 8 und/oder das Anfahrventil 4, insbesondere dessen Ableitseite in geeigneter Weise gekühlt werden, beispielsweise durch eine Flüssigkeitskreislaufkühlung, so dass die Schmelze bereits vorgekühlt wird, wenn sie portioniert wird, so dass die Schmelze gegebenenfalls auch schon mit der Verfestigung begonnen hat, wenn sie portioniert wird.

Weiterhin umfasst die Kühlvorrichtung 6 zumindest eine der Portioniervorrichtung 5 nachgeordnete Kühlstation in Form eines Abkühlbads 23, das unterhalb der Portioniervorrichtung 5 angeordnet ist, so dass die zerteilten Schmelzeportionen direkt durch Schwerkraft in das genannte Abkühlbad fallen. Das Abkühlbad 23 kann je nach Bedarf einkreisig oder auch zweikreisig in der eingangs beschriebenen Weise ausgebildet sein, um die gewünschte Kühlmitteltemperatur aufrecht erhalten zu können. In dem genannten Abkühlbad 23 wird eine Verfestigung der Schmelzeportionen zu handhabbaren Materialbrocken 39 bewirkt.

Wird als Verarbeitungsanlage eine Unterwassergranulierung verwendet, wie Fig. 1 zeigt, kann vorteilhafterweise auch der Wasser- bzw. Flüssigkeitskreislauf 36 der Unterwassergranulierung dazu verwendet werden, dass Abkühlbad 23 und/oder ein weiteres Abkühlbad 24 zu temperieren und/oder zu kühlen. Wie Fig. 1 zeigt, kann über Wärmetauscher 46 und 47 aus dem Abkühlbad 23 Wärme abgeführt und zur Vorwärmung des Wasserkreislaufs 36 verwendet werden, wobei der genannte Wasserkreislauf 36 und dessen Kühlmittel auch einfach nur dazu verwendet werden können, bei Bedarf das Abkühlbad 23 zu kühlen bzw. zu temperieren. Alternativ oder zusätzlich kann die über einen Wärmetauscher 48 dem Abkühlbad 23 und/oder dem Abkühlbad 24 entzogene Wärme auch dazu verwendet werden, in einer nachgeordneten Trocknungsstation 30 beispielsweise dort verwendete Trocknungsluft vorzuwärmen.

Um die Materialbrocken 39 von der Flüssigkeit des Abkühlbads 23 separieren zu können, ist ein Abförderer 25 vorgesehen, der als Bandförderer 26 ausgebildet ist und einen im Abkühlbad 23 unterhalb dessen Pegel verlaufenden Band-abschnitt und einen außerhalb des Abkühlbads 23 verlaufenden Bandabschnitt um-fasst.

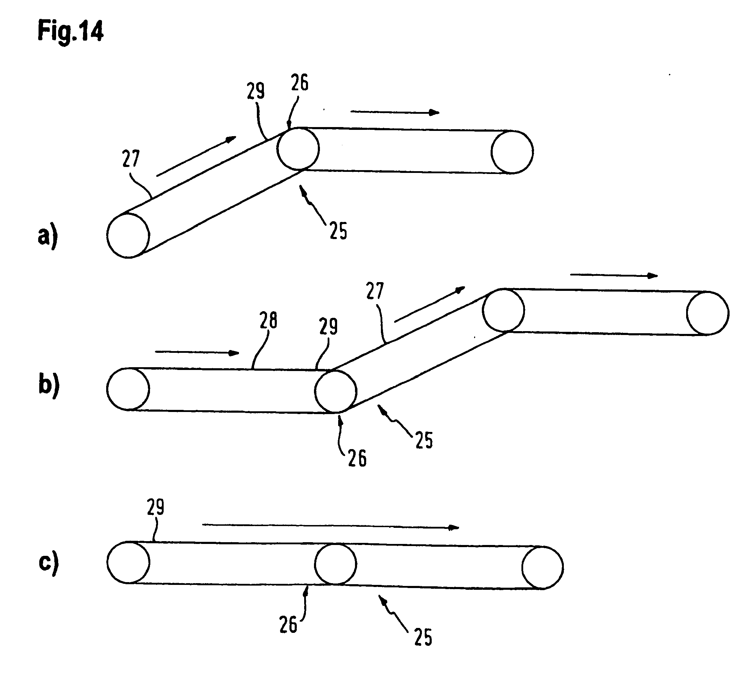

Wie Fig. 14 zeigt, umfasst der Bandförderer 26 einen spitzwinklig zur Horizontalen geneigten Sammelabschnitt 27, der durch den Pegel des Abkühlbads 23 hindurchtritt und auf dem Abkühlbad 23 schwimmende Materialbrocken 39 einsammelt und aus dem Abkühlbad 23 herausfördert, vgl. Fig. 14, dort Teilansicht a).

Zusätzlich kann der genannte Bandförderer 26 auch einen auf dem Boden des Abkühlbads 23 angeordneten Sammelabschnitt 28 umfassen, um untergehende bzw. absinkende Materialbrocken 39 sammeln und abtransportieren zu können. Ein solcher bodenseitiger Sammelabschnitt 28 kann mit einem Sammelabschnitt 27 zum Einsammeln und Abtransportieren schwimmender Materialbrocken 39 kombiniert werden, vgl. Teilansicht b) der Fig. 14.

Eine Luft- und Sprühkühlung kann auch vorgesehen sein, wenn ein Abkühlbad 23 vorgesehen ist, beispielsweise im Bereich des außerhalb des Abkühlbads 23 verlaufenden Abschnitts des Abförderers 25. Solche weiteren Kühlmittel 45 zur Kühlung der aus dem Abkühlbad 23 heraustransportierten Materialbrocken 29 zeigt Bezugsziffer 45 in Fig. 2.

Zusätzlich dem Abkühlbad 23 kann ein weiteres Abkühlbad 24 nachgeordnet sein, welches vorteilhafterweise ein größeres Volumen als das erste bzw. vorhergehende Abkühlbad 23 und/oder eine niedrigere Kühlmediumtemperatur besitzen kann.

Wie Fig. 1 zeigt, ist dem weiteren Abkühlbad 24 erneut ein Abförderer 25 zugeordnet, um die erneut tauch- und/oder schwimmgekühlten Materialbrocken 39 aus dem Bad separieren und abfördern zu können.

Nach dem letzten Abkühlbad können dem Abförderer 25 weitere Kühlmittel, insbesondere aber auch eine Trocknungsvorrichtung 30 zugeordnet oder nachgeordnet sein. Diese Trocknungsvorrichtung 30 kann in der eingangs beschriebenen Weise eine stationäre Trocknungsstation 31 beispielsweise in Form eines Zentrifugaltrockners sein, in die der Abförderer 25 die Materialbrocken 39 zur Trocknung gibt. Alternativ oder zusätzlich kann die Trocknungsvorrichtung 30 auch im Durchlauf arbeiten und einen Durchgangstrockner 32 umfassen, durch den der Abförderer 25 die Materialbrocken 39 hindurchfördert, d.h. die Materialbrocken 39 werden getrocknet, während sie ab- bzw. weitergefördert werden. In der eingangs beschriebenen Weise kann ein solcher Durchgangstrockner 32 beispielsweise eine Gebläsekühlung oder eine Sprühkühlung oder dergleichen umfassen.

## Patentansprüche

1. Schmelzeverarbeitungsanlage, mit einem Schmelzebeschicker (2) zum Beschicken eines Verarbeitungskopfs, insbesondere Granulierkopfs (3), mit Schmelze, wobei dem Schmelzebeschicker (2) stromauf des Verarbeitungskopfs ein Anfahrventil (4) zum Ableiten der Schmelze während einer Anfahr- und/oder Umrüstphase zugeordnet ist, wobei dem Anfahrventil (4) eine Portioniervorrichtung (5) zum Portionieren der abgeleiteten Schmelze in Schmelzeportionen zugeordnet ist, wobei eine Kühlvorrichtung (6) zum Auskühlen der Schmelzeportionen in zumindest teilweise verfestigte Materialbrocken vorgesehen ist, **dadurch gekennzeichnet, dass** die Kühlvorrichtung (6) ein Abkühlbad (23) umfasst, das senkrecht unterhalb der Portioniervorrichtung (5) angeordnet und von den Schmelzeportionen im freien Fall durch Schwerkraft erreichbar ist, wobei dem Abkühlbad (23) ein Abförderer (25) zum Abfördern der verfestigten Materialbrocken aus dem Abkühlbad (23) zugeordnet ist, wobei der Abförderer (25) einen Bandförderer (26) umfasst, der einen spitzwinklig zur Horizontalen geneigten, durch den Pegel des Abkühlbads (23) hindurch verlaufenden ersten Sammelbandabschnitt (27) zum Einsammeln von schwimmenden Materialbrocken aufweist.

2. Schmelzeverarbeitungsanlage nach dem vorhergehenden Anspruch, wobei die Portioniervorrichtung (5) einen Zerteiler (7) zum Zerteilen des aus dem Anfahrventil (4) ausströmenden Schmelzestrangs in vorzugsweise etwa gleichgroße Schmelzeportionen umfasst, wobei der Zerteiler (7) einen Zerteilerkopf (8) mit mehreren Schmelzekanälen (9, 10), die mit der Ableitöffnung des Anfahrventils (4) in Strömungsverbindung bringbar sind, sowie Absperrmittel (11) zum zyklischen Absperren und Freischalten der Schmelzekanäle (9, 10) und/oder Abtrennmittel (12) zum zyklischen Abtrennen der durch die Schmelzekanäle, (9, 10) strömenden Schmelzestränge umfasst.

3. Schmelzeverarbeitungsanlage nach dem vorhergehenden Anspruch, wobei eine Steuereinrichtung zur Steuerung der Absperrmittel (11) derart, dass zumindest immer ein Schmelzekanal (9, 10) zumindest teilweise geöffnet, vorgesehen ist, wobei die Absperrmittel (11) derart ausgebildet sind, dass die Schmelzekanäle (9, 10) im Wechsel zueinander angesperrt und freigeschalten werden, derart, dass bei oder nach dem Öffnen eines Schmelzekanals (9) zumindest ein anderer Schmelzekanal verschlossen wird.

4. Schmelzeverarbeitungsanlage nach einem der vorhergehenden Ansprüche, wobei der Zerteilerkopf (8) relativ zum Anfahrventil (4) beweglich gelagert ist derart, dass je nach Stellung des Zerteilerkopfs (8) ein anderer Schmelzekanal (9, 10) in Strömungsverbindung mit der Ableitöffnung des Anfahrventils (4) bringbar ist, wobei der Zerteilerkopf (8) Teil eines Schlittens (14) ist, der von einem Schlittenantrieb (15) hin und her fahrbar antreibbar ist oder Teil eines Drehkopfs (16) ist, der von einem Drehantrieb (17) rotatorisch vorzugsweise kontinuierlich antreibbar ist.

5. Schmelzeverarbeitungsanlage nach einem der Ansprüche 1-3, wobei der Zerteilerkopf (8) unbeweglich am Anfahrventil (4) befestigt ist und die Absperrmittel und/oder die Abtrennmittel (12) relativ zum Zerteilerkopf (8) beweglich gelagert sind.

6. Schmelzeverarbeitungsanlage nach einem der vorhergehenden Ansprüche, wobei Steuermittel (18) zur variablen Steuerung der Bewegungsgeschwindigkeit und/oder der Bewegungsfrequenz des Zerteilerkopfs (8) relativ zum Anfahrventil (4) und/oder zur variablen Steuerung der Bewegungsgeschwindigkeit und/oder Bewegungsfrequenz der Absperrmittel (11) und/oder der Abtrennmittel (12) relativ zum Zerteilerkopf (8) vorgesehen sind, wobei vorzugsweise die Steuermittel (18) die genannte Bewegungsgeschwindigkeit und/oder Bewegungsfrequenz in Abhängigkeit einer Brockengröße und/oder in Abhängigkeit des Schmelzevolumenstroms arbeitend ausgebildet sind.

7. Schmelzeverarbeitungsanlage nach einem der vorhergehenden Ansprüche 2-6, wobei zwischen dem Zerteilerkopf (8) und dem Anfahrventil (4) ein Zwischen- oder Adapterstück (41) vorgesehen ist, welches einen Verbindungskanal umfasst, der an die Ableitöffnung (38) des Anfahrventils (4) anschließbar ist und mit den Schmelzekanälen (9, 10) im Zerteilerkopf (8) in Strömungsverbindung verbringbar ist, wobei vorzugsweise der genannte Verbindungskanal eine düsenförmige Konturierung und/oder eine vorzugsweise ausgangsseitig vorgesehene Querschnittsverjüngung aufweist.

8. Schmelzeverarbeitungsanlage nach einem der vorhergehenden Ansprüche, wobei die Absperr- und/oder Abtrennmittel (11, 12) ein quer zur Schmelzekanallängsrichtung durch den abzutrennenden Schmelzestrang bewegbares Schneid- und/oder Scherwerkzeug zum Abscheren und/oder Abschneiden des Schmelzestrangs aufweisen, wobei das Schneid- und/oder Scherwerkzeug (19) eine Schneid- und/oder Scherplatte (20) umfasst, die auf einer Zerteilerkopfoberfläche, auf die die Schmelzekanäle (9, 10) des Zerteilerkopfs (8) münden, sitzt und relativ zu den Schmelzekanälen (9, 10) parallel zu der genannten Zerteilerkopfoberfläche beweglich gelagert ist, derart, dass je nach Relativstellung von Zerteilerkopfs (8) Schneid- und/oder Scherplatte (20) eine jeweilige Schmelzekanalmündung freigegeben oder versperrt ist, wobei die Schneid- und/oder Scherplatte (20) vorzugsweise zumindest eine Durchtrittsausnehmung (21) umfasst, die mit den Mündungen der Schmelzekanäle (9, 10) des Zerteilerkopfs (8) zumindest teilweise in Fluchtung verbringbar sind, wobei ein die Durchtrittsausnehmung (21) begrenzender Randabschnitt (22) eine Schneid- und/oder Scherkante bildet.

9. Schmelzeverarbeitungsanlage nach einem der vorhergehenden Ansprüche, wobei das Abkühlbad (23) einen Sekundärkühlkreislauf mit einem außerhalb der die Schmelzeportionen kühlenden Flüssigkeit angeordneten Wärmetauscher zur Kühlung der Primärkühlflüssigkeit, in der die Schmelzeportionen gekühlt werden, umfasst und/oder der Kühlvorrichtung (6) eine Wärmerückgewinnungsvorrichtung zur Rückgewinnung der den Schmelzeportionen und/oder Materialbrocken zu entziehenden Wärme zugeordnet ist, wobei die Wärmerückgewinnungsvorrichtung (50) vorzugsweise Speichermittel zur Wärmespeicherung und/oder Wärmeübertragungsmittel zur Übertragung der rückgewonnenen Wärme an zumindest eine zu beheizende Anlagenkomponente und/oder eine Gebäude- und/oder Externheizanlage aufweist, wobei die Wärmerückgewinnungsvorrichtung (50) vorzugsweise zumindest einen Wärmetauscher (46, 47, 48) zur Rückgewinnung von im Abkühlbad (23, 24) anfallenden Wärme aufweist.

10. Schmelzeverarbeitungsanlage nach einem der vorhergehenden Ansprüche, wobei der Bandförderer (26) einen am Beckenboden angeordneten zweiten Sammelbandabschnitt (28) zum Einsammeln von im Abkühlbad (23, 24) absinkenden Materialbrocken aufweist, wobei der Abförderer (25) ein flüssigkeitsdurchlässiges Umlaufmittel (29) vorzugsweise in Form eines perforierten Bandes aufweist.

11. Schmelzeverarbeitungsanlage nach einem der vorhergehenden Ansprüche, wobei dem Abförderer (25) eine Trocknungsvorrichtung (30) zum zumindest teilweise Abtrocknen der vom Abförderer (25) abgeförderten Materialbrocken zugeordnet ist, wobei die Trocknungsvorrichtung (30) eine dem Abförderer nachgeordnete Trocknungsstation (31) umfassend einen Zentrifugaltrockner, einen Zyklonenabschneider oder einen Bewegungstrockner wie Rüttler oder dergleichen aufweist und/oder einen einem Abförderer-abschnitt zugeordneten Durchgangstrockner (32) zum zumindest teilweise Trocknen der Materialbrocken während des Abförderns umfasst, wobei der genannte Durchgangstrockner (32) vorzugsweise ein Gebläse, einen Absauger, einen Zyklonenabscheider, einen Strahlungstrockner und/oder einen Bewegungstrockner wie einen Rütteltrockner aufweist.

12. Schmelzeverarbeitungsanlage nach einem der vorhergehenden Ansprüche, wobei die Kühlvorrichtung (6) im Bereich der Portioniervorrichtung (5) angeordnete und/oder wirksame Kühlmittel (33) zur Kühlung der Schmelze beim und/oder unmittelbar nach dem Portionieren umfasst, wobei die Kühlmittel (33) vorzugsweise einen Luft- und/oder Gaskühler zur Beaufschlagung der Schmelze mit Kühlluft und/oder -gas, einen Flüssigkeitskühler zur Beaufschlagung der Schmelze mit einer Kühlflüssigkeit und/oder einen Kontaktkühler mit einer von der Schmelzer kontaktierbaren Kühloberfläche umfassen.

13. Schmelzeverarbeitungsanlage nach einem der vorhergehenden Ansprüche, wobei das Anfahrventil (4) zumindest einen Einlasskanal zur Verbindung mit dem zumindest einen Schmelzebeschicker (2), zumindest einen Beschickungskanal zur Verbindung mit dem zumindest einen Verarbeitungskopf und einen Ausschuss- oder Ableitkanal mit einer Ableitöffnung (38) zum Ableiten der Schmelze an den Verarbeitungsköpfen vorbei aufweist, wobei der zumindest eine Eingangskanal durch Verstellen eines bewegbaren Ventilkorpus wahlweise mit einem der Beschickungskanäle oder dem Ausschuss- oder Ableitkanal in Strömungsverbindung bringbar ist.

14. Verfahren zur Verarbeitung von Schmelze in einer Schmelzeverarbeitungsanlage, wobei in einem Verarbeitungsmodus Schmelze von zumindest einem Schmelzebeschicker (2) aus über ein Anfahrventil (4) zu zumindest einem Verarbeitungskopf, insbesondere Granulierkopf (3), gefördert und von dem genannten Verarbeitungskopf verarbeitet wird, und wobei in einem Anfahr- und/oder Umrüstmodus Schmelze, die für die Verarbeitung in dem einen oder den mehreren Verarbeitungsköpfen ungeeignet und/oder für das Recycling in dem oder einem anderen Schmelzebeschicker bestimmt ist, von dem Anfahrventil (4) an dem zumindest einen Verarbeitungskopf vorbei abgeleitet wird, wobei die vom Anfahrventil (4) aus dem bestimmungsgemäßen Verarbeitungsprozess ausgesonderte Schmelze von einer Portioniervorrichtung (5), die einem Ausschusskanal des Anfahrventils (4) zugeordnet ist, in Schmelzeportionen portioniert wird, und die genannten Schmelzeportionen von einer Kühlvorrichtung in zumindest teilweise verfestigte Materialbrocken ausgekühlt werden, **dadurch gekennzeichnet, dass** die Schmelzeportionen im freien Fall in ein senkrecht unter der Portioniervorrichtung (5) angeordnetes Abkühlbad (23) fallengelassen werden, wobei die Schmelzeportionen im Abkühlbad zu Materialbrocken verfestigen und die verfestigten Materialbrocken mittels eines zur Horizontalen geneigten, durch den Pegel des Abkühlbads hindurch verlaufenden Bandförderer (26), der einen spitzwinklig zur Horizontalen geneigten, durch den Pegel des Abkühlbads (23) hindurch verlaufenden ersten Sammelbandabschnitt (27) zum Einsammeln von schwimmenden Materialbrocken aufweist, in dem Abkühlbad eingesammelt und aus dem Abkühlbad abgefördert werden.

## Claims

1. A melt processing plant, comprising a melt charger (2) for charging a processing head, in particular pelletizing head (3), with melt, wherein upstream of the processing head a diverter valve (4) is associated to the melt charger (2) for discharging the melt during a start-up and/or retooling phase, wherein a portioning device (5) for portioning the discharged melt into melt portions is associated to the diverter valve (4), wherein a cooling device (6) for cooling the melt portions to at least partly solidified chunks of material is provided, **characterized in that** the cooling device (6) comprises a cooling bath (23) which is arranged vertically below the portioning device (5) and can be reached by the melt portions in free fall by gravity, wherein a removal conveyor (25) for removing the solidified chunks of material from the cooling bath (23) is associated to the cooling bath (23), wherein the removal conveyor (25) comprises a belt conveyor (26) which includes a first collecting belt portion (27) inclined at an acute angle to the horizontal and extending through the level of the cooling bath (23) for collecting floating chunks of material.

2. The melt processing plant according to the preceding claim, wherein the portioning device (5) comprises a splitter (7) for splitting the melt strand flowing out of the diverter valve (4) into melt portions of preferably about equal size, wherein the splitter (7) comprises a splitter head (8) with a plurality of melt channels (9, 10) which can be brought in flow connection with the discharge opening of the diverter valve (4), and shut-off means (11) for cyclically shutting off and clearing the melt channels (9, 10) and/or separating means (12) for cyclically separating the melt strands flowing through the melt channels (9, 10).

3. The melt processing plant according to the preceding claim, wherein a control means is provided for controlling the shut-off means (11) such that at least always one melt channel (9, 10) is at least partly opened, wherein the shut-off means (11) are formed such that the melt channels (9, 10) are shut off and cleared in alternation such that on or after opening a melt channel (9) at least one other melt channel is closed.

4. The melt processing plant according to any of the preceding claims, wherein the splitter head (8) is movably mounted relative to the diverter valve (4) such that depending on the position of the splitter head (8) another melt channel (9, 10) can be brought in flow connection with the discharge opening of the diverter valve (4), wherein the splitter head (8) is part of a carriage (14) which can reciprocably be driven by a carriage drive (15) or is part of a rotary head (16) which can rotatorily, preferably continuously, be driven by a rotary drive (17).

5. The melt processing plant according to any of claims 1-3, wherein the splitter head (8) is unmovably attached to the diverter valve (4) and the shut-off means and/or the separating means (12) are movably mounted relative to the splitter head (8).

6. The melt processing plant according to any of the preceding claims, wherein control means (18) are provided for variably controlling the speed of movement and/or the movement frequency of the splitter head (8) relative to the diverter valve (4) and/or for variably controlling the speed of movement and/or movement frequency of the shut-off means (11) and/or the separating means (12) relative to the splitter head (8), wherein preferably the control means (18) are formed to operate said speed of movement and/or movement frequency in dependence on a chunk size and/or in dependence on the volumetric flow rate of the melt.

7. The melt processing plant according to any of the preceding claims 2-6, wherein between the splitter head (8) and the diverter valve (4) an intermediate or adapter piece (41) is provided, which comprises a connecting channel which is connectable to the discharge opening (38) of the diverter valve (4) and can be brought in flow connection with the melt channels (9, 10) in the splitter head (8), wherein preferably said connecting channel has a nozzle-shaped contour and/or a cross-sectional taper preferably provided on the outlet side.

8. The melt processing plant according to any of the preceding claims, wherein the shut-off and/or separating means (11, 12) include a cutting and/or shearing tool movable through the melt strand to be separated transversely to the longitudinal direction of the melt channel for shearing and/or cutting off the melt strand, wherein the cutting and/or shearing tool (19) comprises a cutting and/or shear plate (20) which is seated on a splitter head surface onto which the melt channels (9, 10) of the splitter head (8) open and is movably mounted relative to the melt channels (9, 10) parallel to said splitter head surface such that depending on the relative position of the cutting and/or shear plate (20) of the splitter head (8) a respective melt channel orifice is cleared or blocked, wherein the cutting and/or shear plate (20) preferably comprises at least one passage recess (21) which can at least partly be brought in alignment with the orifices of the melt channels (9, 10) of the splitter head (8), wherein an edge portion (22) defining the passage recess (21) forms a cutting and/or shearing edge.

9. The melt processing plant according to any of the preceding claims, wherein the cooling bath (23) comprises a secondary cooling circuit with a heat exchanger arranged outside the liquid cooling the melt portions for cooling the primary cooling liquid in which the melt portions are cooled and/or a heat recovery device for recovering the heat to be withdrawn from the melt portions and/or chunks of material is associated to the cooling device (6), wherein the heat recovery device (50) preferably includes storage means for heat storage and/or heat transfer means for transmitting the recovered heat to at least one plant component to be heated and/or to a building and/or external heating system, wherein the heat recovery device (50) includes at least one heat exchanger (46, 47, 48) for recovering heat obtained in the cooling bath (23, 24).

10. The melt processing plant according to any of the preceding claims, wherein the belt conveyor (26) includes a second collecting belt portion (28) arranged at the bottom of the basin for collecting chunks of material sinking down in the cooling bath (23, 24), wherein the removal conveyor (25) includes a liquid-permeable circulating means (29) preferably in the form of a perforated belt.

11. The melt processing plant according to any of the preceding claims, wherein a drying device (30) for at least partly drying the chunks of material removed by the removal conveyor (25) is associated to the removal conveyor (25), wherein the drying device (30) includes a drying station (31) downstream of the removal conveyor, comprising a centrifugal drier, a cyclone separator or a moving drier such as a shaker or the like and/or a continuous drier (32) associated to a removal conveyor portion for at least partly drying the chunks of material while removing the same, wherein said continuous drier (32) preferably includes a blower, an extractor, a cyclone separator, a radiation drier and/or a moving drier such as a shaking drier.

12. The melt processing plant according to any of the preceding claims, wherein the cooling device (6) comprises cooling means (33) arranged and/or effective in the region of the portioning device (5) for cooling the melt on and/or directly after portioning, wherein the cooling means (33) preferably comprise an air and/or gas cooler for charging the melt with cooling air and/or gas, a liquid cooler for charging the melt with a cooling liquid and/or a contact cooler with a cooling surface to be contacted by the melt.

13. The melt processing plant according to any of the preceding claims, wherein the diverter valve (4) includes at least one inlet channel for connection with the at least one melt charger (2), at least one feed channel for connection with the at least one processing head, and a scrap or discharge channel with a discharge opening (38) for discharging the melt past the processing heads, wherein by shifting a movable valve body the at least one inlet channel can selectively be brought in flow connection with one of the feed channels or the scrap or discharge channel.

14. A method for processing melt in a melt processing plant, wherein in a processing mode melt is conveyed from at least one melt charger (2) via a diverter valve (4) to at least one processing head, in particular pelletizing head (3), and is processed by said processing head, and wherein in a start-up and/or retooling mode melt which is unsuitable for processing in the one or more processing heads and/or is determined for recycling in the one or other melt charger is discharged past the at least one processing head by the diverter valve (4), wherein the melt separated by the diverter valve (4) from the proper processing process is portioned into melt portions by a portioning device (5) which is associated to a scrap channel of the diverter valve (4), and said melt portions are cooled by a cooling device to obtain at least partly solidified chunks of material, **characterized in that** the melt portions are dropped in free fall into a cooling bath (23) arranged vertically below the portioning device (5), wherein the melt portions are solidified to chunks of material in the cooling bath and the solidified chunks of material are collected in the cooling bath and removed from the cooling bath by means of a belt conveyor (26) inclined with respect to the horizontal and extending through the level of the cooling bath, which includes a first collecting belt portion (27) inclined at an acute angle to the horizontal and extending through the level of the cooling bath (23) for collecting floating chunks of material.

## Revendications

1. Installation de traitement de masse fondue, comportant un chargeur de masse fondue (2) destiné à alimenter en masse fondue une tête de traitement, en particulier une tête de granulation (3), une vanne de démarrage (4), destinée à dériver la masse fondue pendant une phase de démarrage et/ou de rééquipement, étant associée au chargeur de masse fondue (2) en amont de la tête de traitement, un dispositif de portionnement (5) destiné à portionner la masse fondue dérivée étant associé à la vanne de démarrage (4), un dispositif de refroidissement (6) étant prévu pour refroidir les portions de masse fondue pour obtenir des fragments de matériau au moins en partie solidifiés, **caractérisée en ce que** le dispositif de refroidissement (6) comprend un bain de refroidissement (23) qui est agencé à la verticale au-dessous du dispositif de portionnement (5) et qui peut être atteint par les portions de masse fondue en chute libre par gravité, un convoyeur d'enlèvement (25) destiné à faire enlever les fragments de matériau solidifiés hors du bain de refroidissement (23) étant associé au bain de refroidissement (23), le convoyeur d'enlèvement (25) comportant un convoyeur à bande (26) qui présente un premier tronçon de bande collectrice (27), qui est incliné en angle aigu par rapport à l'horizontale et qui s'étend à travers le niveau du bain de refroidissement (23) pour collecter des fragments de matériau flottants.

2. Installation de traitement de masse fondue selon la revendication précédente, dans laquelle le dispositif de portionnement (5) comprend un découpeur (7) destiné à découper le cordon de masse fondue s'écoulant hors de la vanne de démarrage (4) pour obtenir des portions de masse fondue de préférence de même taille, le découpeur (7) comprenant une tête de découpeur (8) avec plusieurs canaux de masse fondue (9, 10) qui peuvent être mis en liaison d'écoulement avec l'orifice de dérivation de la vanne de démarrage (4), ainsi que des organes d'arrêt (11) pour arrêter et libérer de manière cyclique les canaux de masse fondue (9, 10) et/ou des organes de séparation (12) pour séparer de manière cyclique les cordons de masse fondue s'écoulant à travers les canaux de masse fondue (9, 10).

3. Installation de traitement de masse fondue selon la revendication précédente, dans laquelle est prévu un dispositif de commande pour la commande des organes d'arrêt (11) de telle sorte que toujours au moins un canal de masse fondue (9, 10) est ouvert au moins partiellement, les organes d'arrêt (11) étant réalisés de telle sorte que les canaux de masse fondue (9, 10) sont alternativement arrêtés et libérés l'un par rapport à l'autre, de telle sorte que pendant ou après l'ouverture d'un canal de masse fondue (9), au moins un autre canal de masse fondue est fermé.

4. Installation de traitement de masse fondue selon l'une des revendications précédentes, dans laquelle la tête de découpeur (8) est montée mobile par rapport à la vanne de démarrage (4), de telle sorte que selon la position de la tête de découpeur (8), un autre canal de masse fondue (9, 10) peut être mis en liaison d'écoulement avec l'orifice de dérivation de la vanne de démarrage (4), la tête de découpeur (8) faisant partie d'un chariot (14) qui peut être entraîné par un entraînement de chariot (15) de manière à se déplacer en va-et-vient ou faisant partie d'une tête rotative (16) qui peut être entraînée en rotation par un entraînement rotatif (17), de préférence de manière continue.

5. Installation de traitement de masse fondue selon l'une des revendications 1 à 3, dans laquelle la tête de découpeur (3) est fixée de manière immobile sur la vanne de démarrage (4) et les organes d'arrêt et/ou les organes de séparation (12) sont montés mobiles par rapport à la tête de découpeur (8).

6. Installation de traitement de masse fondue selon l'une des revendications précédentes, dans laquelle sont prévus des organes de commande (18) destinés à la commande variable de la vitesse de mouvement et/ou de la fréquence de mouvement de la tête de découpeur (8) par rapport à la vanne de démarrage (4) et/ou par rapport à la commande variable de la vitesse de mouvement et/ou de la fréquence de mouvement des organes d'arrêt (11) et/ou des organes de séparation (12) par rapport à la tête de découpeur (8), les organes de commande (18) étant de préférence réalisés pour générer ladite vitesse de mouvement et/ou ladite fréquence de mouvement en fonction d'une taille de fragments et/ou en fonction du flux volumique de masse fondue.

7. Installation de traitement de masse fondue selon l'une des revendications 2 à 6, dans laquelle il est prévu entre la tête de découpeur (8) et la vanne de démarrage (4) une pièce intermédiaire ou un adaptateur (41) qui comprend un canal de liaison qui peut être connecté à l'orifice de dérivation (38) de la vanne de démarrage (4) et qui peut être mis en liaison d'écoulement avec les canaux de masse fondue (9, 10) dans la tête de découpeur (8), ledit canal de liaison présentant de préférence un contour en forme de buse et/ou un rétrécissement de section transversale prévu de préférence sur le côté extérieur.

8. Installation de traitement de masse fondue selon l'une des revendications précédentes, dans laquelle les organes d'arrêt et/ou de séparation (11, 12) présentent un outil de coupe et/ou de cisaillement déplaçable transversalement à la direction longitudinale du canal de masse fondue à travers le cordon de masse fondue à séparer, pour cisailler et/ou couper le cordon de masse fondue, l'outil de coupe et/ou de cisaillement (19) comprenant une plaque de coupe et/ou de cisaillement (20) qui est placée sur une surface de la tête de découpeur, sur laquelle débouchent les canaux de masse fondue (9, 10) de la tête de découpeur (8) et qui est montée mobile par rapport aux canaux de masse fondue (9, 10), parallèlement à la surface de la tête de découpeur, de telle sorte que selon la position relative de la plaque de découpe et/ou de cisaillement (20) de la tête de découpeur (8), une embouchure de canal de masse fondue respective est libérée ou bloquée, la plaque de coupe et/ou de cisaillement (20) comprenant de préférence au moins un évidement de passage (21) qui peut être mis au moins partiellement en alignement avec les embouchures des canaux de masse fondue (9, 10) de la tête de découpeur (8), un tronçon de bord (22), qui limite l'évidement de passage (21), formant une arête de coupe et/ou de cisaillement.

9. Installation de traitement de masse fondue selon l'une des revendications précédentes, dans laquelle le bain de refroidissement (23) comprend un circuit de refroidissement secondaire avec un échangeur de chaleur agencé en dehors du fluide refroidissant les portions de masse fondue, pour refroidir le fluide de refroidissement primaire dans lequel sont refroidies les portions de masse fondue, et/ou au dispositif de refroidissement (6) est associé un dispositif de récupération de chaleur destiné à la récupération de la chaleur qui doit être extraite des portions de masse fondue et/ou des fragments de matériau, le dispositif de récupération de chaleur (50) présentant de préférence des moyens de stockage pour le stockage de chaleur et/ou des moyens de transmission de chaleur pour transmettre la chaleur récupérée à au moins un composant d'installation à chauffer et/ou à une installation de bâtiment et/ou de chauffage externe, le dispositif de récupération de chaleur (50) présentant de préférence au moins un échangeur de chaleur (46, 47, 48) destiné à la récupération de chaleur produite dans le bain de refroidissement (23, 24).

10. Installation de traitement de masse fondue selon l'une des revendications précédentes, dans laquelle le convoyeur à bande (26) présente un deuxième tronçon de bande collectrice (28) agencé sur le fond du bassin pour collecter des fragments de matériau tombant dans le bain de refroidissement, le convoyeur d'enlèvement (25) présentant un moyen de circulation (29) perméable aux liquides, de préférence sous forme d'une bande perforée.

11. Installation de traitement de masse fondue selon l'une des revendications précédentes, dans laquelle un dispositif de séchage (30) est associé au convoyeur d'enlèvement (25) pour sécher au moins partiellement les fragments de matériau enlevés par le convoyeur d'enlèvement (25), le dispositif de séchage (30) présentant une station de séchage (31) agencée en aval du convoyeur d'enlèvement, comprenant un séchoir centrifuge, un séparateur cyclonique ou un séchoir à agitation tel qu'un vibrateur ou pièce similaire, et/ou comprenant un séchoir continu (32) associé à un tronçon de convoyeur d'enlèvement pour sécher au moins partiellement les fragments de matériau pendant l'enlèvement, le séchoir continu (32) présentant de préférence un ventilateur, un aspirateur, un séparateur cyclonique, un séchoir par rayonnement et/ou un séchoir à agitation tel qu'un séchoir par vibrations.

12. Installation de traitement de masse fondue selon l'une des revendications précédentes, dans laquelle le dispositif de refroidissement (6) comprend des moyens de refroidissement (33) agencés et/ou actifs dans la zone du dispositif de portionnement (5), destinés à refroidir la masse fondue pendant et/ou directement après le portionnement, les moyens de refroidissement (33) comprenant de préférence un refroidisseur à air et/ou à gaz pour solliciter la masse fondue avec de l'air et/ou du gaz de refroidissement, un refroidisseur à fluide pour solliciter la masse fondue avec un fluide de refroidissement et/ou un refroidisseur par contact avec une surface de refroidissement susceptible d'être mise en contact par la masse fondue.

13. Installation de traitement de masse fondue selon l'une des revendications précédentes, dans laquelle la vanne de démarrage (4) présente au moins un canal d'entrée pour la liaison avec au moins un chargeur de masse fondue (2), au moins un canal d'alimentation pour la liaison avec ladite au moins une tête de traitement et un canal de rebut ou de dérivation avec un orifice de dérivation (38) pour dériver la masse fondue en la faisant passer devant les têtes de traitement, ledit au moins canal d'entrée pouvant être mis en liaison d'écoulement sélectivement avec un des canaux d'alimentation ou avec le canal de rebut ou de dérivation par réglage d'un corps de vanne mobile.

14. Procédé de traitement de masse fondue dans une installation de traitement de masse fondue, dans lequel, dans un mode de traitement, de la masse fondue est transportée depuis au moins un chargeur de masse fondue (2) via une vanne de démarrage (4) vers au moins une tête de traitement, en particulier une tête de granulation (3), et est traitée par ladite tête de traitement, et dans lequel dans un mode de démarrage et/ou de rééquipement, de la masse fondue qui est inadaptée au traitement dans l'une ou dans plusieurs têtes de traitement et/ou qui est destinée au recyclage dans le chargeur de masse fondue ou dans un autre, est dérivée de la vanne de démarrage (4) en passant devant au moins une tête de traitement, la masse fondue triée par la vanne de démarrage (4) hors du processus de traitement conforme à l'usage étant portionnée en portions de masse fondue par un dispositif de portionnement (5), qui est associé à un canal de rebut de la vanne de démarrage (4), et lesdites portions de masse fondue étant refroidies par un dispositif de refroidissement pour obtenir des fragments de matériau au moins partiellement solidifiés, **caractérisé en ce qu'**on fait tomber les portions de masse fondue en chute libre dans un bain de refroidissement (23) agencé à la verticale au-dessous du dispositif de portionnement (5), les portions de masse fondue se solidifiant dans le bain de refroidissement en formant des fragments de matériau, et au moyen d'un convoyeur à bande (26) incliné par rapport à l'horizontale et s'étendant à travers le niveau du bain de refroidissement, lequel présente un premier tronçon de bande collectrice (27), qui est incliné en angle aigu par rapport à l'horizontale et qui s'étend à travers le niveau du bain de refroidissement (23), pour collecter des fragments de matériau flottants, les fragments de matériau solidifiés étant collectés dans le bain de refroidissement et enlevés du bain de refroidissement.
